# EUROPEAN PATENT APPLICATION

(11) **EP 4 600 049 A2**
(43) Date of publication of application: **13.08.2025**
(21) Application number: 25179974.8
(22) Date of filing: 11.04.2024
(51) Int. Cl.: B60B 3/00

(54) **COATING, FRAME, WHEEL ASSEMBLY COMPRISING THE COATING AND THE FRAME AND MOBILE DEVICE COMPRISING THE WHEEL ASSEMBLY**

(30) Priority: 12.04.2023 IT 202300007008
(62) Divisional of application: 24169601.2
(71) Applicant: Stiga S.p.A. in breve anche St. S.p.A., 31033 Castelfranco Veneto (TV) (IT)
(72) Inventor: FOSCARO, Carlo, I-31050 Casacorba di Vedelago (TV) (IT); SCAPIN, Michele, I-36061 Bassano del Grappa (VI) (IT); CECCHETTO, Mauro, I-35018 San Martino di Lupari (PD) (IT); GATTO, Carla, 35010 Trebaseleghe (PD) (IT)
(74) Representative: PGA S.p.A.

(57) **Abstract**

The present invention relates to a coating (1) for wheels and a frame (10) for wheels. The coating (1) has a hollow cylindrical configuration and extends radially between an inner portion (2) and an outer portion (3). The outer portion (3) acts as a tread element and confers the ability to maintain, in use, contact with the ground, to such coating (1). The inner portion (2) defines a plurality of engagement elements. The frame (10) comprises a hub (25), a crown (28) and a supporting element which operates in connection between the hub (25) and the crown (28). The crown (28) is arranged peripherally with respect to the hub (25) and acts as a support element for the coating (1) when the coating (1) is applied to the frame (10) so as to externally encircle the crown (28). The crown (28) defines a plurality of engagement elements. According to the invention, the engagement elements of the coating (1) comprise a plurality of teeth (4) and define a plurality of cavities (5), the teeth (4) emerging from a surface of the inner portion (2) away from the outer portion (3) and alternating with the cavities (5) so that two consecutive teeth of the plurality of teeth (4) are separated from a cavity of the plurality of cavities (5).

## Description

### FIELD OF THE INVENTION

The present invention relates to a coating for wheels capable of adapting to operating conditions. The present invention further relates to a frame for coating for wheels.

The present invention further relates to a wheel assembly comprising such coating for wheels constrained to the relative frame.

The present invention further relates to a mobile device comprising at least one wheel assembly according to the following invention.

The present invention further relates to a method of rolling such wheel assembly when it is in use.

### BACKGROUND ART

Devices moved by means of wheels are known in the field of gardening, agriculture and maintenance of outdoor areas. The wheels can be driving wheels, thus moved directly by motors or by traction systems, or idle wheels which have the function of supporting and directing the mobile device. Such mobile devices can be manually driven, therefore necessarily led by a human operator, or self-driving devices or remote-controlled devices.

The mobile devices are configured to perform maintenance operations in an outdoor environment under a multitude of ground conditions and conformations and weather conditions. For example, according to a non-exhaustive description, the ground can be grassy, gravelly, partially or totally dirt, such ground can be dry, therefore dusty or sandy, or moist or wet, therefore slippery and muddy.

It is clear how the wheels of such devices must ensure a good traction capacity in very different ground conditions and in addition in very critical conditions from the point of view of safety. In particular, such problem becomes even more critical for self-driving maintenance devices, which must be capable of working without the supervision and intervention of a human operator, therefore they must have the ability not to get stuck in the working area. Preferably, the mobile devices must not require the replacement of the wheels depending on the type of ground on which the mobile device must operate, there is thus a need for a wheel adapted to ensure excellent performance in any weather condition and conformation or type of work surface.

Wheels for self-propelled vehicles such as robot lawnmowers of the rigid type formed by various plastic components interlocked with each other to form a single body are known, however such solution is poorly suited to conditions in which the ability to adhere to the ground is severely tested. Furthermore, such solutions are particularly subject to the accumulation of debris and mud, which drying out above the wheels can even cause them to lock or make their rotation particularly difficult, also leading to serious damage to components such as the gears of the gearboxes of the motors which move such traction wheels or, for example, the bearings and/or bushings, which are interposed between the shaft of the motor or the axle of the traction system and the wheel hub.

Components outside the wheel are also known, in particular mounted protruding from the frame or mudguard of the self-propelled vehicle in order to remove the debris which can accumulate on the tread of the wheel. However, such components do not ensure an effective cleaning of the wheels and even worsen the navigation capacity of the vehicle as it is a fact that, during the operation of self-propelled vehicles, debris and solidified mud tend to get stuck and accumulate between the tread and the cleaning components, causing the wheels to lock. As a consequence of this inability to favour the cleaning of the wheels with a relative degradation of the traction of the vehicle, these components are in fact very often removed, cut or disassembled by the end users who own the vehicles in operation or by the vehicle dealers when selling the product.

The prior art document EP3725146A1 discloses a tyre for a robot lawnmower. Such tyre, thanks to the particular pressure at which it is inflated, ensures grip and cleanliness of the wheel. However, the purpose is not fully achieved by the tyre alone. In fact, to further improve the grip of the driving wheels, additional discs are provided, specifically toothed discs adapted to engage the ground and having an improved grip. Such toothed discs are not comfortable to assemble or remove since they must be fixed, for example, with a plurality of screws to the wheel and also ruin the appearance of the lawn and further damage the health of the turfgrass. A further disadvantage of the aforementioned prior art solution is that the use of the tyre, in addition to not solving the technical problem it is proposed to solve, increases the costs of the machine to which the wheel is applied and reduces its reliability as it is an easily damaged component, even more so in an outdoor environment where there are sharp stones, protruding roots and other critical obstacles which can easily damage such tyre.

The prior art document US2018/0093528A1 discloses a wheel assembly comprising a frame and a coating which include mutual engagement elements intended to establish an interference fit. The engagement elements of the frame consist in five equally spaced cavities arranged on the external annular surface of the frame, while the engagement elements of the coating comprise a plurality of profiles projecting from the inner ring of the coating, in positions corresponding to the cavities of the frame. Each profile includes five ridges extending radially from the inner ring. The coating further comprises a plurality of partitions connecting the outer ring to the inner ring, the partitions providing the coating with a radial loosening, so that, under load, the inner ring approaches the outer ring, with a consequent deformation of the outer ring and a consequent increase of the surface of the coating in contact with the ground.

### OBJECT OF THE INVENTION

Therefore, the object of the present invention is to solve at least one of the drawbacks and/or limitations of the previous solutions.

A first objective is to make a coating for wheels with a greater ground contact surface and with a capacity to remove debris from its surface without the intervention of an operator and without the use of tools which can cause damage to the coating itself and necessarily require the continuous attention of a human operator and his/her intervention to ensure the cleanliness of the wheel.

A further objective is to make a coating for wheels with an ability to remove debris from its dry surface. A further objective is to make a frame for wheels which works synergistically with the aforesaid coating for wheels.

A further objective is to make a wheel assembly which ensures excellent traction abilities and adhesion to the ground even in situations with higher criticality.

A further objective is to make a wheel assembly which has a self-cleaning ability.

A further objective is to make a wheel assembly which does not cause the navigation to stop or vehicles to slip.

A further objective is to make a wheel assembly which allows a mobile device or vehicle to climb along sloping grounds without hesitations or navigation stops.

A further objective is to provide a rolling method which allows a vehicle, provided with at least one wheel according to the present invention, to always navigate in the best grip conditions while always ensuring the best navigation performance of the vehicle.

A further objective is to provide a mobile device, comprising at least one wheel assembly according to the present invention, with a very low probability of getting stuck in the working area, thus reducing the total number of stops in the entire useful life of the mobile device.

A further objective is to provide a mobile device comprising at least one wheel assembly according to the present invention, which does not require any intervention by the user for cleaning its wheels.

These objectives and others, which will appear more clearly from the following description, are substantially achieved by a coating for wheels, a frame for wheels, a wheel assembly, a mobile device and a rolling method in accordance with one or more of the appended claims, each of which taken alone (without the related dependencies) or in any combination with the other claims, as well as according to the following aspects and/or embodiments, variously combined, also with the aforesaid claims.

### SUMMARY

Aspects of the invention are described here below.

The above objectives are achieved, together with further advantageous effects, by the present invention as defined by the appended claims and/or by the following aspects.

A 1st aspect of the present invention relates to a coating for wheels having a hollow cylindrical configuration and extending radially between an inner portion and an outer portion.

A 2nd aspect of the present invention, dependent on the 1st aspect, relates to a coating for wheels in which said outer portion is configured to act as a tread element and in particular confers on said coating for wheels the ability to maintain, in use, contact with the ground.

A 3rd aspect of the present invention, dependent on any of the preceding aspects, relates to a coating for wheels in which said inner portion is configured to define a plurality of engagement elements.

A 4th aspect of the present invention, dependent on the preceding aspect, relates to a coating for wheels in which said engagement elements are in particular configured to make an interference-type coupling between said coating and an element of a frame for wheels, in particular an interference-type coupling such as to generate, between said coating and said element of said frame, forces in at least partially tangential direction.

A 5th aspect of the present invention, dependent on the preceding aspect, relates to a coating for wheels in which said engagement elements are applied to said inner portion, comprise a plurality of teeth and define a plurality of cavities, in particular a plurality of cavities open inwards.

A 6th aspect of the present invention, dependent on the preceding aspect, relates to a coating for wheels in which said teeth emerge from a surface of said inner portion away from said outer portion. A 7th aspect of the present invention, dependent on the preceding aspect, relates to a coating for wheels in which said teeth alternate with said cavities so that two consecutive teeth of said plurality of teeth are separated by a cavity of said plurality of cavities.

An 8th aspect of the present invention, dependent on any one of the preceding aspects, relates to a coating for wheels formed by a monolithic piece, in particular in which said engagement elements, in particular said teeth, are made in a single body with said inner portion.

A 9th aspect of the present invention, dependent on any one of the preceding aspects, relates to a coating for wheels in which said coating comprises a plurality of parts constrained together for example by means of welding and/or adhesive elements and/or constraining elements and/or interlocking elements.

A 10th aspect of the present invention, dependent at least on the 5th aspect, relates to a coating for wheels in which, taking a tooth of said plurality of teeth and taking a cavity of said plurality of cavities, the ratio between the extension in the radial direction of said coating at said tooth and the extension in the radial direction of said coating at said cavity is comprised between 1.9 and 2.7.

An 11th aspect of the present invention, dependent on the preceding aspect, relates to a coating for wheels in which, taking a tooth of said plurality of teeth and taking a cavity of said plurality of cavities, the ratio between the extension in the radial direction of said coating at said tooth and the extension in the radial direction of said coating at said cavity is preferably equal to 2.5 or close to 2.5.

A 12th aspect of the present invention, dependent at least on the 5th aspect, relates to a coating for wheels in which said teeth have substantially the same extension in the radial direction.

A 13th aspect of the present invention, dependent on at least the 5th aspect and alternative to the 12th aspect, relates to a coating for wheels in which, taking a first tooth and a second tooth of said plurality of teeth, the extension in the radial direction of said first tooth differs from the extension in the radial direction of said second tooth.

A 14th aspect of the present invention, dependent at least on the 5th aspect, relates to a coating for wheels in which the teeth and the cavities have a spatial periodicity.

A 15th aspect of the present invention, dependent on at least the 5th aspect, relates to a coating for wheels in which, taking a tooth of said plurality of teeth and taking a cavity of said plurality of cavities, said tooth extends circumferentially for a first angular amplitude and said cavity extends circumferentially for a second angular amplitude.

A 16th aspect of the present invention, dependent on the preceding aspect, relates to a coating for wheels in which a ratio between said first angular amplitude and said second angular amplitude is comprised between 0.1 and 2.8, in particular between 0.5 and 2, more in particular between 0.5 and 1.5, even more in particular between 0.5 and 0.9 and/or relates to a coating for wheels in which said first angular amplitude is less than said second angular amplitude.

A 17th aspect of the present invention, dependent at least on the 15th aspect, relates to a coating for wheels in which said teeth have substantially the same extension in the circumferential direction.

An 18th aspect of the present invention, dependent at least on the 15th aspect and alternative to the 17th aspect, relates to a coating for wheels in which, after taking a first tooth and a second tooth of said plurality of teeth, the extension in the circumferential direction of said first tooth differs from the extension in the circumferential direction of said second tooth.

A 19th aspect of the present invention, dependent at least on the 15th aspect, relates to a coating for wheels in which said cavities have substantially the same extension in the circumferential direction.

A 20th aspect of the present invention, dependent at least on the 15th aspect and alternative to the 19th aspect, relates to a coating for wheels in which, taking a first cavity and a second cavity of said plurality of cavities, the extension in the circumferential direction of said first cavity differs from the extension in the circumferential direction of said second cavity.

A 21st aspect of the present invention, dependent on any one of the preceding aspects, relates to a coating for wheels which describes an ideally axial-symmetrical shape.

A 22nd aspect of the present invention, dependent on the preceding aspect, relates to a coating for wheels which is ideally symmetrical with respect to an axis, said axis passing through the central point of the circumference described by the outer edge of said coating, and a central point of a tooth of said plurality of teeth or of a cavity of said plurality of cavities.

A 23rd aspect of the present invention, dependent at least on the 5th aspect, relates to a coating for wheels in which the number of said teeth is comprised between 4 and 20, preferably comprised between 10 and 14.

A 24th aspect of the present invention, dependent on the preceding aspect, relates to a coating for wheels in which the number of said teeth is equal to 12.

A 25th aspect of the present invention, dependent at least on the 5th aspect, relates to a coating for wheels in which said teeth have a substantially square or rectangular or trapezoidal or polygonal or circular or elliptical shape.

A 26th aspect of the present invention, dependent at least on the 5th aspect, relates to a coating for wheels in which said cavities have a substantially square or rectangular or trapezoidal or polygonal or circular or elliptical shape.

A 27th aspect of the present invention, dependent at least on the 5th aspect, relates to a coating for wheels in which at least one tooth of said plurality of teeth has a first lateral side which extends along a predefined extension direction.

A 28th aspect of the present invention, dependent on the preceding aspect, relates to a coating for wheels in which said extension direction defines with the radial direction an angle less than 20°.

A 29th aspect of the present invention, dependent on the preceding aspect, relates to a coating for wheels in which said extension direction defines with the radial direction an angle comprised between 0.1° and 5°.

A 30th aspect of the present invention, dependent on the preceding aspect, relates to a coating for wheels in which said extension direction defines with the radial direction an angle of about 1°.

A 31st aspect of the present invention, dependent at least on the 27th aspect, relates to a coating for wheels in which said at least one tooth of said plurality of teeth further has a second lateral side opposite said first lateral side and substantially symmetrical with respect to said first lateral side.

A 32nd aspect of the present invention, dependent at least on the 5th aspect, relates to a coating for wheels in which said teeth are identical in shape and/or size.

A 33rd aspect of the present invention, dependent at least on the 5th aspect, relates to a coating for wheels in which at least one tooth of said plurality of teeth comprises at least one through hole or slot, in particular a cylindrical hole extending in a substantially axial direction.

A 34th aspect of the present invention, dependent at least on the preceding aspect, relates to a coating for wheels in which said hole or slot is in particular configured to accommodate a constraining element of said frame, in particular said hole or slot is located in a substantially central and/or substantially barycentric position with respect to the extension of said at least one tooth.

A 35th aspect of the present invention, dependent at least on the 33rd aspect or the 34th aspect, relates to a coating for wheels having a plurality of through holes or slots, said holes or slots being in particular configured to accommodate constraining elements of said frame.

A 36th aspect of the present invention, dependent at least on the preceding aspect, relates to a coating for wheels in which the number of said holes or slots coincides with the number of said teeth, so that in each tooth of said plurality of teeth a hole or a slot of said plurality of holes or slots is obtained.

A 37th aspect of the present invention, dependent at least on the 35th aspect or the 36th aspect, relates to a coating for wheels, said holes or slots being identical in shape and/or size.

A 38th aspect of the present invention, dependent at least on the 5th aspect, relates to a coating for wheels in which, in a condition of said coating disassembled and optionally also in a condition of said coating assembled to said frame, the upper margin of each tooth of said plurality of teeth has greater extension with respect to the corresponding base and in which the open margin of each cavity of said plurality of cavities has lesser extension with respect to the corresponding bottom margin.

A 39th aspect of the present invention, dependent on one or more of the preceding aspects, relates to a coating in which said outer portion comprises a plurality of plugs, in particular configured to give said coating traction and adhesion to the ground.

A 40th aspect of the present invention, dependent on the preceding aspect, relates to a coating in which said plugs extend at least partially radially away from said inner portion.

A 41st aspect of the present invention, dependent on the 39th aspect or the 40th aspect, relates to a coating in which a plurality of recesses, in particular configured to ensure the drainage of liquid elements and/or the passage of solid debris, are obtained between said plugs.

A 42nd aspect of the present invention, dependent at least on the 39th aspect, relates to a coating in which at least one plug of said plurality of plugs extends on a surface of said outer portion from one end side margin up to an opposite end side margin.

A 43rd aspect of the present invention, dependent on the preceding aspect, relates to a coating in which each plug of said plurality of plugs extends on said surface of said outer portion starting from said end side margin up to said opposite end side margin.

A 44th aspect of the present invention, dependent at least on the 41st aspect, relates to a coating in which at least one recess of said plurality of recesses extends on a surface of said outer portion from one end side margin up to an opposite end side margin.

A 45th aspect of the present invention, dependent on the preceding aspect, relates to a coating in which each recess of said plurality of recesses extends on said surface of said outer portion starting from said end side margin up to said opposite end side margin.

A 46th aspect of the present invention, dependent at least on the 39th aspect, relates to a coating in which at least one plug of said plurality of plugs has an at least partially curvilinear trend.

A 47th aspect of the present invention, dependent at least on the 41st aspect, relates to a coating in which at least one recess of said plurality of recesses has an at least partially curvilinear trend.

A 48th aspect of the present invention, dependent at least on the 39th aspect, relates to a coating in which at least one plug of said plurality of plugs exhibits a first curvature and a second curvature so as to describe a substantially S-shape.

A 49th aspect of the present invention, dependent on the preceding aspect, relates to a coating in which the transition between said first curvature and said second curvature occurs at a flex point, optionally in which the distance between said flex point and said end side margin is substantially equal to the distance between said flex point and said opposite end side margin.

A 50th aspect of the present invention, dependent at least on the 41st aspect, relates to a coating in which at least one recess of said plurality of recesses exhibits a first curvature and a second curvature so as to describe a substantially S-shape.

A 51st aspect of the present invention, dependent on the preceding aspect, relates to a coating in which the transition between said first curvature and said second curvature occurs at a flex point, optionally in which the distance between said flex point and said end side margin is substantially equal to the distance between said flex point and said opposite end side margin.

A 52nd aspect of the present invention, dependent at least on the 39th aspect, relates to a coating in which said plugs are identical in shape and/or size.

A 53rd aspect of the present invention, dependent at least on the 41st aspect, relates to a coating in which said recesses are identical in shape and/or size.

A 54th aspect of the present invention, dependent on one or more of the preceding aspects, relates to a coating in which said coating is made of plastic material and/or rubbery material.

A 55th aspect of the present invention, dependent on the preceding aspect, relates to a coating in which said material is a thermoplastic elastomer with a hardness comprised between 40 and 90 shore.

A 56th aspect of the present invention, dependent on the preceding aspect, relates to a coating in which said material is a thermoplastic elastomer with a hardness comprised between 60 and 80 shore.

A 57th aspect of the present invention, dependent on the preceding aspect, relates to a coating in which said material is a thermoplastic elastomer with a hardness equal to 75 shore.

A 58th aspect of the present invention, dependent on one or more of the preceding aspects, relates to a coating in which the diameter of said coating is comprised between 50 mm and 500 mm.

A 59th aspect of the present invention, dependent on the preceding aspect, relates to a coating in which the diameter of said coating is comprised between 100 mm and 300 mm.

A 60th aspect of the present invention relates to a frame for wheels comprising a hub, a crown and at least one supporting element.

A 61st aspect of the present invention, dependent on the preceding aspect, relates to a frame for wheels in which said hub is configured to be coupled to a drive shaft or to an axle of a traction system. A 62nd aspect of the present invention, dependent on the preceding aspect, relates to a frame for wheels in which said crown is configured to act as a support element for a coating for wheels when said coating is applied to said frame so as to externally encircle said crown.

A 63rd aspect of the present invention, dependent on the preceding aspect, relates to a frame for wheels in which said crown is arranged peripherally with respect to said hub.

A 64th aspect of the present invention, dependent on the preceding aspect, relates to a frame for wheels in which said supporting element operates in connection between said hub and said crown and is in particular configured to confer structural strength to said frame.

A 65th aspect of the present invention, dependent on the preceding aspect, relates to a frame for wheels in which said crown is configured to define a plurality of engagement elements.

A 66th aspect of the present invention, dependent on the preceding aspect, relates to a frame for wheels in which said engagement elements are in particular configured to provide an interference-type coupling between said frame and said coating, in particular an interference-type coupling such as to generate, between said frame and said coating, forces in at least partially tangential direction.

A 67th aspect of the present invention, dependent on one or more of the aspects from the 60th to the 66th, relates to a frame for wheels in which said supporting element comprises a disc and in which said hub and said crown project from a same face of said disc.

A 68th aspect of the present invention, dependent on the preceding aspect, relates to a frame for wheels in which said hub and/or said crown extend along a substantially axial direction and/or are substantially orthogonal to said disc.

A 69th aspect of the present invention, dependent on the 67th aspect or the 68th aspect, relates to a frame for wheels in which said supporting element comprises, optionally in association with said disc, a plurality of reinforcing elements.

A 70th aspect of the present invention, dependent on the preceding aspect, relates to a frame for wheels in which said reinforcing elements are in particular ribs and/or ridges and/or spokes and extend between said hub and said crown preferably in at least a partially radial direction.

A 71st aspect of the present invention, dependent on one or more of the aspects from the 60th to the 70th, relates to a frame for wheels in which said crown is integrated with said supporting element, in particular with said disc, in a monolithic piece or in which said crown is rigidly constrained to said supporting element, in particular to said disc, by coupling means for example screws and/or welds and/or joints and/or magnetic elements.

A 72nd aspect of the present invention, dependent on one or more of the aspects from the 60th to the 71st, relates to a frame for wheels in which the extension in a radial direction of said supporting element, in particular said disc, exceeds the extension in the radial direction of said crown.

A 73rd aspect of the present invention, dependent on one or more of the aspects from the 60th to the 72nd, relates to a frame for wheels in which said crown has a circumference length less than the circumference length of the end portion of said supporting element, in particular of said disc, and greater than half the circumference length of the end portion of said supporting element, in particular of said disc.

A 74th aspect of the present invention, dependent on one or more of the aspects from the 60° to 73°, relates to a frame for wheels in which said crown is substantially coaxial to said hub and/or concentric to said supporting element, in particular to said disc.

A 75th aspect of the present invention, dependent at least on the 65th aspect, relates to a frame for wheels in which said engagement elements comprise a plurality of teeth and define a plurality of cavities, in particular a plurality of cavities open outwards.

A 76th aspect of the present invention, dependent on the preceding aspect, relates to a frame for wheels in which said teeth emerge from a surface of said crown away from said hub and in which said teeth alternate with said cavities so that two consecutive teeth of said plurality of teeth are separated by a cavity of said plurality of cavities.

A 77th aspect of the present invention, dependent at least on the 75th aspect or the 76th aspect, relates to a frame for wheels in which, taking a tooth of said plurality of teeth and taking a cavity of said plurality of cavities, the ratio between the distance between the axis of said frame and a point belonging to a facing surface of said crown at said tooth and the distance between the axis of said frame and a point belonging to a facing surface of said crown at said cavity is comprised between 1.05 and 1.4, preferably comprised between 1.1 and 1.3.

A 78th aspect of the present invention, dependent at least on the 75th aspect, relates to a frame for wheels in which said teeth have substantially the same extension in the radial direction.

A 79th aspect of the present invention, dependent on at least the 75th aspect and alternative to the 78th aspect, relates to a frame for wheels in which, taking a first tooth and a second tooth of said plurality of teeth, the extension in the radial direction of said first tooth differs from the extension in the radial direction of said second tooth.

An 80th aspect of the present invention, dependent at least on the 75th aspect, relates to a frame for wheels in which said teeth and/or said cavities have a substantially square or rectangular or trapezoidal or polygonal or circular or elliptical shape.

An 81st aspect of the present invention, dependent at least on the 75th aspect, relates to a frame for wheels in which the upper margin of each tooth of said plurality of teeth has greater extension with respect to the corresponding base and in which the open margin of each cavity of said plurality of cavities has lesser extension with respect to the corresponding bottom margin.

An 82nd aspect of the present invention, dependent at least on the 75th aspect, relates to a frame for wheels in which said teeth and said cavities have a spatial periodicity.

An 83rd aspect of the present invention, dependent on one or more of the aspects from the 60th to the 82nd, relates to a frame for wheels in which said crown describes an ideally axial-symmetrical shape. An 84th aspect of the present invention, dependent on one or more of the aspects from the 60th to the 83red, relates to a frame for wheels in which said frame describes an ideally axial-symmetrical shape, in particular said frame is ideally symmetrical with respect to an axis passing through the central point of the circumference described by said frame and a central point of a tooth of said plurality of teeth or of a cavity of said plurality of cavities.

An 85th aspect of the present invention, dependent at least on the 75th aspect, relates to a frame for wheels in which at least one tooth of said plurality of teeth has a first lateral side which extends along a predefined extension direction.

An 86th aspect of the present invention, dependent on the preceding aspect, relates to a frame for wheels in which said extension direction defines with the radial direction an angle less than 20°, preferably comprised between 0.1° and 10°, more preferably about 1°.

An 87th aspect of the present invention, dependent on the 85th aspect or the 86th aspect, relates to a frame for wheels in which said at least one tooth of said plurality of teeth further has a second lateral side opposite said first lateral side and substantially symmetrical with respect to said first lateral side.

An 88th aspect of the present invention, dependent at least on the 75th aspect, relates to a frame for wheels in which said teeth are identical in shape and/or size.

An 89th aspect of the present invention, dependent on one or more of the aspects from the 60th to the 88th, relates to a frame for wheels in which said frame comprises at least one constraining element, in particular at least one constraining element extending in a substantially axial direction.

A 90th aspect of the present invention, dependent on the preceding aspect, relates to a frame for wheels in which said frame comprises a plurality of constraining elements.

A 91st aspect of the present invention, dependent on the preceding aspect, relates to a frame for wheels in which said at least one constraining element is configured to be housed inside a through hole or slot of said coating.

A 92nd aspect of the present invention, dependent on the preceding 90th aspect or 91st aspect, relates to a frame for wheels in which said at least one constraining element is integrated with said supporting element, in particular with said disc, in a monolithic piece.

A 93rd aspect of the present invention, dependent on the preceding aspect, relates to a frame for wheels in which said monolithic piece also integrates said crown.

A 94th aspect of the present invention, dependent on the 92nd aspect or the 93rd aspect, relates to a frame for wheels in which each constraining element of said plurality of constraining elements is integrated in said monolithic piece.

A 95th aspect of the present invention, dependent at least on the 90th aspect, relates to a frame for wheels in which said at least one constraining element comprises a peg.

A 96th aspect of the present invention, dependent on the preceding aspect, relates to a frame for wheels in which said peg comprises a substantially cylindrical body and a tapered free end.

A 97th aspect of the present invention, dependent at least on the 95th aspect, relates to a frame for wheels in which each constraining element of said plurality of constraining elements comprises a peg. A 98th aspect of the present invention, dependent at least on the 90th aspect, relates to a frame for wheels in which said constraining elements are identical in shape and/or size.

A 99th aspect of the present invention, dependent at least on the 90th aspect, relates to a frame for wheels in which, taking a first point belonging to said hub, a second point belonging to said at least one constraining element and an imaginary straight segment in conjunction with said first point with said second point, said imaginary segment intersects said at least one crown.

A 100th aspect of the present invention, dependent at least on the 90th aspect, relates to a frame for wheels in which said at least one constraining element, in particular a peg, is located in the volume defined by a cavity of said plurality of cavities.

A 101st aspect of the present invention, dependent on the preceding aspect, relates to a frame for wheels in which said at least one constraining element is located in a substantially central and/or substantially barycentric position with respect to the extension of said volume.

A 102nd aspect of the present invention, dependent at least on the 100th aspect, relates to a frame for wheels in which the number of said constraining elements coincides with the number of said cavities, so that each of said constraining elements is located in the volume defined by the corresponding cavity of said plurality of cavities.

A 103rd aspect of the present invention, dependent on one or more of the aspects from the 60th to the 102nd, relates to a frame for wheels in a rigid material, in particular plastic and/or plastic filled with glass and/or metal and/or a metal alloy.

A 104th aspect of the present invention, dependent on the preceding aspect, relates to a frame for wheels in which said frame is made of polypropylene filled with glass.

A 105th aspect of the present invention, dependent on the preceding aspect, relates to a frame for wheels in which said frame is made of polypropylene filled with 30% glass.

A 106th aspect of the present invention, dependent on the 103rd aspect, relates to a frame for wheels in which said frame is made of iron or steel or aluminium or aluminium alloy.

A 107th aspect of the present invention relates to a wheel assembly configured to allow the movement of a device by rolling said wheel assembly, in particular said device being a device for the maintenance of land, turfgrasses or gardens.

A 108th aspect of the present invention, dependent on the preceding aspect, relates to a wheel assembly comprising a frame according to one or more of the aspects from the 60th to the 106th and a coating according to one or more of the aspects from the 1st to the 59th.

A 109th aspect of the present invention, dependent on the preceding aspect, relates to a wheel assembly in which there is a condition of mutual engagement between the engagement elements of said frame, in particular of said crown of said frame, and the engagement elements of said coating, in particular of said inner portion of said coating.

A 110th aspect of the present invention, dependent on the preceding aspect, relates to a wheel assembly in which each tooth of said plurality of teeth of said coating is at least partially housed within a corresponding cavity of said plurality of cavities of said frame and in which each tooth of said plurality of teeth of said frame is at least partially housed within a corresponding cavity of said plurality of cavities of said coating.

A 111th aspect of the present invention, dependent on the preceding aspect, relates to a wheel assembly in which each lateral side of the teeth of said coating is in contact with a lateral side of the teeth of said frame.

A 112th aspect of the present invention, dependent on the preceding aspect, relates to a wheel assembly in which each lateral side of the teeth of said coating is configured to exert a pressure against the adjacent lateral side of the teeth of said frame.

A 113th aspect of the present invention, dependent on the 111th aspect or the 112th aspect, relates to a wheel assembly in which each lateral side of the teeth of said coating is configured to be capable of sliding in a radial direction along the adjacent lateral side of the teeth of said frame.

A 114th aspect of the present invention, dependent on one or more of the aspects from the 107th to the 113th, relates to a wheel assembly in which, at least in a configuration of said wheel assembly in conjunction with a condition of no load on said wheel assembly, the upper margin of at least one tooth of said plurality of teeth of said coating is positioned at a distance from the bottom margin of the corresponding cavity of said plurality of cavities of said frame.

A 115th aspect of the present invention, dependent on one or more aspects from the 107th to the 114th, relates to a wheel assembly in which the upper margin of at least one tooth of said plurality of teeth of said frame is positioned at a distance from the bottom margin of the corresponding cavity of said plurality of cavities of said coating.

A 116th aspect of the present invention, dependent on one or more aspects from the 107th to the 115th, relates to a wheel assembly in which each cavity of said plurality of cavities of said frame defines a respective inner volume, said inner volume being partially occupied by a corresponding tooth of said plurality of teeth of said coating.

A 117th aspect of the present invention, dependent on the preceding aspect, relates to a wheel assembly in which a ratio between said inner volume and the volume occupied by said tooth is comprised between 1.01 and 1.5.

A 118th aspect of the present invention, dependent on one or more aspects from the 107th to the 117th, relates to a wheel assembly in which each cavity of said plurality of cavities of said coating defines a respective inner volume, said inner volume being partially occupied by a corresponding tooth of said plurality of teeth of said frame.

A 119th aspect of the present invention, dependent on the preceding aspect, relates to a wheel assembly in which a ratio between said inner volume and the volume occupied by said tooth is comprised between 1.01 and 1.5.

A 120th aspect of the present invention, dependent on one or more aspects from the 107th to the 119th, relates to a wheel assembly in which said at least one constraining element, in particular a peg, of said frame is accommodated in said at least one hole or slot of said coating.

A 121st aspect of the present invention, dependent on the preceding aspect, relates to a wheel assembly in which each constraining element, in particular peg, of said plurality of constraining elements, in particular pegs, of said frame is accommodated in a corresponding hole or slot of said plurality of holes or slots of said coating.

A 122nd aspect of the present invention, dependent on one or more aspects from the 107th to the 121st, relates to a wheel assembly in which the extension in the radial direction of said at least one constraining element, in particular of said peg, even more in particular of said body of said peg, of said frame is less than the extension in the radial direction of said at least one hole or slot of said coating. A 123rd aspect of the present invention, dependent on the preceding aspect, relates to a wheel assembly in which the extension in the radial direction of each constraining element, in particular of each peg, even more in particular of the body of each peg, of said frame is less than the extension in the radial direction of each hole or slot of said plurality of holes or slots of said coating.

A 124th aspect of the present invention, dependent on one or more aspects from the 107th to the 123rd, relates to a wheel assembly in which at least part of said coating is configured to assume, in use, a compression configuration.

A 125th aspect of the present invention, dependent on the preceding aspect, relates to a wheel assembly in which said compression configuration determines a deformation, in particular a deformation in a direction perpendicular to a work surface on which the wheel assembly is positioned, of at least one portion of said coating, in particular in which, in said compression configuration, at least one tooth of said plurality of teeth of said coating sinks and/or increases its penetration inside at least one cavity of said plurality of cavities of said frame and/or in particular in which, in said compression configuration, the bottom margin of at least one cavity of said plurality of cavities of said coating approaches the upper margin of at least one tooth of said plurality of teeth of said frame.

A 126th aspect of the present invention, dependent on the 124th aspect or the 125th aspect, relates to a wheel assembly in which said coating in said compression configuration has a greater contact surface with the ground, the contact surface increased in particular by increasing the capacity of adhesion to the ground and traction of said coating.

A 127th aspect of the present invention, dependent on one or more of the 107th to 126th aspects, relates to a wheel assembly in which at least part of said coating is configured to assume, in use, a release configuration.

A 128th aspect of the present invention, dependent on the preceding aspect, relates to a wheel assembly in which said release configuration determines a partial or total attenuation of said deformation, in particular of said deformation in a direction perpendicular to a work surface on which the wheel assembly is positioned, of at least one portion of said coating, in particular in which, in said release configuration, at least one tooth of said plurality of teeth of said coating emerges from inside at least one cavity of said plurality of cavities of said frame and/or in particular in which, in said release configuration, the bottom margin of at least one cavity of said plurality of cavities of said coating extends away from the upper margin of at least one tooth of said plurality of teeth of said frame.

A 129th aspect of the present invention, dependent on the 127th aspect or the 128th aspect, relates to a wheel assembly in which said teeth of said coating in said release configuration are adapted to be limited in the movement of emerging from said cavities of said frame by the walls of said cavities of said frame, said walls of said cavities of said frame partially interfering with the walls of said teeth of said coating, in particular the upper margin of each tooth of said plurality of teeth of said coating being greater than the corresponding base and the open margin of each cavity of said plurality of cavities of said frame being smaller than the bottom margin of said cavity, preferably the volume of each cavity of said plurality of cavities of said frame being greater than the volume of each tooth of said plurality of teeth of said coating.

A 130th aspect of the present invention, dependent on one or more of the aspects from the 127th to the 129th, relates to a wheel assembly in which said teeth of said coating in said release configuration are adapted to be limited in the movement of emerging from said cavities of said frame by said constraining elements of said frame, in particular said constraining elements of said frame being inserted inside said holes or slots, in particular the volume described by at least one hole or slot of said plurality of holes or slots of said coating being greater than the volume of the corresponding constraining element of said frame.

A 131st aspect of the present invention, dependent on the preceding aspect, relates to a wheel assembly in which the volume described by at least one hole or slot of said plurality of holes or slots of said coating is greater than at least twice the volume of the corresponding constraining element of said frame.

A 132nd aspect of the present invention, dependent on one or more of the aspects from 107th to 131st, relates to a wheel assembly in which said coating is configured to assume, in use, a release configuration of a portion of said coating subsequent to a compression configuration of a portion of said coating, in particular said portion of said coating being the same portion.

A 133rd aspect of the present invention, dependent on the preceding aspect, relates to a wheel assembly in which a succession of said compression configuration and said release configuration is capable of determining, in use, a plastic deformation of said coating, said plastic deformation in particular favouring the elimination of debris, for example earthy debris, possibly accumulated in said recesses of said coating.

A 134th aspect of the present invention, dependent at least on the 109th aspect, relates to a wheel assembly in which the lateral sides of said teeth of said coating and the lateral sides of said teeth of said frame are constrained to each other according to a primary constraint, said primary constraint being in particular a constraint in a tangential direction, in particular said tangential direction being substantially parallel to the rolling direction of said wheel assembly.

A 135th aspect of the present invention, dependent on the preceding aspect, relates to a wheel assembly in which the lateral sides of said teeth of said coating and the lateral sides of said teeth of said frame are further constrained to each other according to a secondary constraint, said secondary constraint being in particular a constraint in a radial direction, in particular said radial direction being substantially perpendicular to the rolling direction of said wheel assembly.

A 136th aspect of the present invention, dependent on one or more of the aspects from the 107th to the 135th, relates to a wheel assembly further comprising a covering element for closing said wheel assembly.

A 137th aspect of the present invention, dependent on the preceding aspect, relates to a wheel assembly in which said covering element is fixed to said frame so as to form with said frame a box-like structure having a compartment therein, said compartment being in particular delimited by said hub of said frame, by said supporting element, in particular disc, of said frame, by said crown of said frame and by said covering element.

A 138th aspect of the present invention, dependent on the 136th aspect or the 137th aspect, relates to a wheel assembly in which the extension in the radial direction of said covering element exceeds the extension in the radial direction of said crown of said frame.

A 139th aspect of the present invention, dependent on the preceding aspect, relates to a wheel assembly in which the extension in the radial direction of said covering element is substantially equal to the extension in the radial direction of said supporting element, in particular of said disc, of said frame.

A 140th aspect of the present invention, dependent on one or more of the aspects from the 136th to the 139th, relates to a wheel assembly in which a portion of said coating is interposed between a peripheral portion of said covering element and a peripheral portion of said frame.

A 141st aspect of the present invention, dependent on the preceding aspect, relates to a wheel assembly in which a portion of said coating is interposed between a peripheral portion of said covering element and a peripheral portion of said supporting element, in particular a disc, of said frame, so as to suppress or limit the freedom of movement of said coating in the axial direction.

A 142nd aspect of the present invention, dependent on one or more of the aspects from 136th to 141st, relates to a wheel assembly in which said covering element comprises at least one auxiliary constraining element, in particular at least one auxiliary constraining element extending in a substantially axial direction, in particular said covering element comprises a plurality of auxiliary constraining elements.

A 143rd aspect of the present invention, dependent on the preceding aspect, relates to a wheel assembly in which said at least one auxiliary constraining element is accommodated inside a through hole or slot of said coating.

A 144th aspect of the present invention, dependent at least on the 137th aspect, relates to a wheel assembly in which at least one weight is accommodated in said compartment.

A 145th aspect of the present invention, dependent on the preceding aspect, relates to a wheel assembly in which said at least one weight comprises at least one rigid material with a high specific weight, for example iron.

A 146th aspect of the present invention, dependent on the 144th aspect or the 145th aspect, relates to a wheel assembly in which said at least one weight is shaped like a disc.

A 147th aspect of the present invention relates to a mobile device configured to support and manage at least one payload, said at least one payload being rigidly and optionally removably constrained to said mobile device and being able, for example, to be a cutting plate.

A 148th aspect of the present invention, dependent on the preceding aspect, relates to a mobile device comprising at least one wheel assembly according to one or more of the aspects from the 107th to the 146th, said at least one wheel assembly being rotatably constrained to said mobile device.

A 149th aspect of the present invention, dependent on the preceding aspect, relates to a mobile device in which said wheel assembly is rotatably constrained to a drive shaft or to an axle of a traction system of said mobile device, a bearing or a bushing being interposed between said drive shaft or said axle of said traction system and said hub of said wheel assembly.

A 150th aspect of the present invention, dependent on the 148th aspect or the 149th aspect, relates to a mobile device comprising at least a first wheel assembly and a second wheel assembly, said first wheel assembly and second wheel assembly being according to one or more of the aspects from the 107th to the 146th and being coaxial therebetween, in particular said first wheel assembly and second wheel assembly being mounted on said mobile device as drive wheels.

A 151st aspect of the present invention, dependent on the 103rd aspect, relates to a rolling method of at least one wheel assembly according to one or more of the aspects from the 107th to the 146th. Said wheel assembly is configured to operate a movement, in particular a movement in a navigation direction on a work surface, of a mobile device to which said at least one wheel assembly is rotatably constrained, in particular said mobile device being configured for the maintenance of land, turfgrasses or gardens.

A 152nd aspect of the present invention, dependent on the preceding aspect, relates to a rolling method comprising at least the steps of:
A. triggering the movement of said mobile device, activating the rolling of said wheel assembly on the ground, in particular in said navigation direction;
B. applying to the hub of said wheel assembly a force in a direction substantially perpendicular to the ground, in particular to said work surface, in particular said force being a weight force;
C. compressing the portion of said coating of said wheel assembly in contact with the ground, in particular with said work surface, in particular increasing the resting surface of said coating to the work surface so as to improve the traction capacity and adherence to the ground of said coating;
D. releasing the previously compressed portion of said coating.

A 153rd aspect of the present invention, dependent on the preceding aspect, relates to a rolling method in which said steps C. and D. determine a plastic deformation of said outer portion of said coating, said deformation favouring the elimination of debris, for example earthy debris, possibly accumulated in said recesses of said coating.

A 154th aspect of the present invention, dependent on the 152nd aspect or the 153rd aspect, relates to a rolling method in which, in said step C., the movement of at least one tooth of said plurality of teeth of said coating is constrained in particular by means of at least one constraining element, in particular by means of at least one peg, of said plurality of constraining elements, in particular pegs, of said supporting element, in particular disc, of said frame.

A 155th aspect of the present invention, dependent on the preceding aspect, relates to a rolling method in which said at least one constraining element, in particular said at least one peg, of said plurality of constraining elements, in particular pegs, of said supporting element, in particular disc, of said frame is accommodated in the corresponding hole or slot of the tooth of said plurality of teeth of said coating. A 156th aspect of the present invention, dependent on the 154th aspect or the 155th aspect, relates to a rolling method in which said at least one tooth of said plurality of teeth of said coating is constrained to remain within the volume defined by the corresponding cavity of said plurality of cavities of said frame.

Further aspects of the invention are listed below.

A first aspect of the invention relates to a coating (1) for wheels, said coating (1) having a hollow cylindrical configuration and extending radially between an inner portion (2) and an outer portion (3), said outer portion (3) being configured to act as a tread element and conferring in particular to said coating (1) the ability to maintain, in use, contact with the ground, wherein that said inner portion (2) is configured to define a plurality of engagement elements, said engagement elements being in particular configured to make an interference-type coupling between said coating (1) and an element of a frame (10) for wheels, in particular an interference-type coupling such as to generate, between said coating (1) and said element of said frame (10), forces in at least partially tangential direction.

A second aspect of the invention, dependent on the first aspect, relates to a coating (1), said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5) and/or
wherein said coating (1) is made of plastic material and/or rubbery material, in particular said material being a thermoplastic elastomer with a hardness comprised between 40 and 90 shore, preferably comprised between 60 and 80 shore, more preferably such hardness being equal to 75 shore, and/or wherein the diameter of said coating (1) is comprised between 50 mm and 500 mm, preferably between 100 mm and 300 mm, and/or
wherein, taking a tooth of said plurality of teeth (4) and taking a cavity of said plurality of cavities (5), said tooth extends circumferentially for a first angular amplitude and said cavity extends circumferentially for a second angular amplitude,
optionally wherein said first angular amplitude is less than said second angular amplitude and/or optionally wherein a ratio of said first angular amplitude to said second angular amplitude is comprised between 0.1 and 2.8, in particular between 0.5 and 2, more in particular between 0.5 and 1.5, still more in particular between 0.5 and 0.9.

A third aspect of the invention, dependent on the first aspect or on the second aspect, relates to a coating (1), wherein at least one hole (40) or a through slot is obtained in at least one tooth of said plurality of teeth (4), in particular a cylindrical hole extending in a substantially axial direction, said hole (40) or slot being in particular configured to accommodate a constraining element of said frame (10), in particular said hole or slot being located in a substantially central and/or substantially barycentric position with respect to the extension of said at least one tooth,
in particular wherein said coating (1) has a plurality of holes (40) or through slots, said holes (40) or slots being in particular configured to accommodate constraining elements of said frame (10) and wherein the number of said holes (40) or slots coincides with the number of said teeth (4), so that a hole or slot of said plurality of holes (40) or slots is obtained in each tooth of said plurality of teeth (4), optionally wherein said holes (40) or slots are identical to each other in shape and/or size.

A fourth aspect of the invention, dependent on the second aspect or on the third aspect, relates to a coating (1), wherein said outer portion (3) comprises a plurality of plugs (30), in particular configured to give said coating (1) traction and adhesion to the ground, said plugs extending in an at least partially radial direction away from said inner portion (2), and wherein a plurality of recesses (32), in particular configured to ensure the drainage of liquid elements and/or the passage of solid debris, are obtained between said plugs (30),
in particular wherein said plugs (30) and/or said recesses (32) are identical to each other in shape and/or size and/or
in particular wherein at least one plug of said plurality of plugs (30) and/or at least one recess of said plurality of recesses (32) extend on a surface of said outer portion (3) starting from an end side margin (3') up to an opposite end side margin (3"), optionally wherein each plug of said plurality of plugs (30) and/or each recess of said plurality of recesses (32) extend on said surface of said outer portion (3) starting from said end side margin (3') up to said opposite end side margin (3") and/or
in particular wherein at least one plug of said plurality of plugs (30) and/or at least one recess of said plurality of recesses (32) has an at least partially curvilinear trend,
optionally wherein at least one plug of said plurality of plugs (30) and/or at least one recess of said plurality of recesses (32) exhibits a first curvature (31', 32') and a second curvature (31", 32") so as to describe a substantially S-shape and wherein the transition between said first curvature (31', 32') and said second curvature (31", 32") occurs at a flex point (31"', 32"'), optionally wherein the distance between said flex point (31"', 32‴) and said end side margin (3') is substantially equal to the distance between said flex point (31‴, 32‴) and said end side margin (3").

A fifth aspect of the invention, dependent on any one of the aspects from the second aspect to the fourth aspect, relates to a coating (1), wherein said coating (1) is formed by a monolithic piece, in particular wherein said engagement elements, in particular said teeth (4), are made in a single body with said inner portion (2) or wherein said coating (1) comprises a plurality of pieces constrained together for example by welding and/or adhesive elements and/or constraining elements and/or interlocking elements, in particular wherein said engagement elements, in particular said teeth (4), are applied to said inner portion (2) and/or
wherein, taking a tooth of said plurality of teeth (4) and taking a cavity of said plurality of cavities (5), the ratio between the extension in the radial direction of said coating (1) at said tooth and the extension in the radial direction of said coating (1) at said cavity is comprised between 1.9 and 2.7, preferably equal to 2.5 or close to 2.5, and/or
wherein said teeth (4) have substantially the same extension in the radial direction or wherein, taking a first tooth and a second tooth of said plurality of teeth (4), the extension in the radial direction of said first tooth differs from the extension in the radial direction of said second tooth and/or
wherein said teeth (4) and said cavities (5) have a spatial periodicity and/or
wherein said teeth (4) have substantially the same extension in the circumferential direction or wherein, taking a first tooth and a second tooth of said plurality of teeth (4), the extension in the circumferential direction of said first tooth differs from the extension in the circumferential direction of said second tooth and/or wherein said cavities (5) have substantially the same extension in the circumferential direction or wherein, taking a first cavity and a second cavity of said plurality of cavities (5), the extension in the circumferential direction of said first cavity differs from the extension in the circumferential direction of said second cavity and/or
wherein said coating (1) describes an ideally axial-symmetrical shape, in particular said coating (1) being ideally symmetrical with respect to an axis (X), said axis (X) passing through the central point of the circumference described by the outer edge of said coating (1), and a central point of a tooth of said plurality of teeth (4) or of a cavity of said plurality of cavities (5) and/or
wherein the number of said teeth (4) is comprised between 4 and 20, preferably between 10 and 14, more preferably equal to 12, and/or
wherein said teeth (4) and/or said cavities (5) have a substantially square or rectangular or trapezoidal or polygonal or circular or elliptical section and/or shape and/or
wherein at least one tooth of said plurality of teeth (4) has a first lateral side wall (41) extending along a predefined extension direction, said extension direction defining with the radial direction an angle less than 20°, preferably comprised between 0.1° and 5°, more preferably about 1°, optionally wherein said at least one tooth of said plurality of teeth (4) further has a second lateral side wall (42) opposite said first lateral side wall and substantially symmetrical with respect to said first lateral side wall (41) and/or
wherein said teeth (4) are identical to each other in shape and/or size and/or
wherein, in a condition of said coating (1) disassembled and optionally also in a condition of said coating (1) assembled to said frame (10), the upper margin of each tooth of said plurality of teeth (4) has greater extension with respect to the corresponding base and wherein the open margin of each cavity of said plurality of cavities (5) has lesser extension with respect to the corresponding bottom margin.

A sixth aspect of the invention relates to a frame (10) for wheels, comprising a hub (25), a crown (28) and at least one supporting element, said hub (25) being configured to be coupled to a drive shaft or to an axle of a traction system, said crown (28) being configured to act as a support element for a coating (1) for wheels when said coating (1) is applied to said frame (10) so as to externally encircle said crown (28), said crown (28) being arranged peripherally with respect to said hub (25), said supporting element operating in connection between said hub (25) and said crown (28) and being in particular configured to confer structural strength to said frame (10), wherein said crown (28) is configured to define a plurality of engagement elements, said engagement elements being in particular configured to make an interference-type coupling between said frame (10) and said coating (1), in particular an interference-type coupling such as to generate, between said frame (10) and said coating (1), forces in at least partially tangential direction.

A seventh aspect of the invention, dependent on the sixth aspect, relates to a frame (10) wherein said engagement elements comprise a plurality of teeth (14) and defining a plurality of cavities (15), in particular a plurality of cavities (15) open outwards, wherein said teeth (14) emerge from a surface of said crown (28) away from said hub (25) and wherein said teeth (14) alternate with said cavities (15) so that two consecutive teeth of said plurality of teeth (14) are separated by a cavity of said plurality of cavities (15),
in particular wherein, taking a tooth of said plurality of teeth (14) and taking a cavity of said plurality of cavities (5), the ratio between the distance between the axis of said frame (10) and a point belonging to a facing surface of said crown (28) at said tooth and the distance between the axis of said frame (10) and a point belonging to a facing surface of said crown (28) at said cavity is comprised between 1.05 and 1.4, preferably comprised between 1.1 and 1.3, and/or
in particular wherein said teeth (14) have substantially the same extension in the radial direction or wherein, taking a first tooth and a second tooth of said plurality of teeth (14), the extension in the radial direction of said first tooth differs from the extension in the radial direction of said second tooth and/or in particular wherein said teeth (14) and/or said cavities (15) have a substantially square or rectangular or trapezoidal or polygonal or circular or elliptical shape and/or
in particular wherein the upper margin of each tooth of said plurality of teeth (14) has greater extension with respect to the corresponding base and wherein the open margin of each cavity of said plurality of cavities (15) has lesser extension with respect to the corresponding bottom margin and/or in particular wherein said teeth (14) and said cavities (15) have a spatial periodicity and/or
in particular wherein said crown (28) describes an ideally axial-symmetrical shape, optionally wherein said frame (10) describes an ideally axial-symmetrical shape, in particular said frame (10) being ideally symmetrical with respect to an axis (X), said axis (X) passing through the central point of the circumference described by said frame (10) and a central point of a tooth of said plurality of teeth (14) or of a cavity of said plurality of cavities (15) and/or
in particular wherein at least one tooth of said plurality of teeth (14) has a first lateral side wall (14') extending along a predefined extension direction, said extension direction defining with the radial direction an angle less than 20°, preferably comprised between 0.1° and 10°, more preferably about 1°, optionally wherein said at least one tooth of said plurality of teeth (14) further has a second lateral side wall (14") opposite said first lateral side wall (14') and substantially symmetrical with respect to said first lateral side wall (14') and/or
in particular wherein said teeth (14) are identical to each other in shape and/or size.

An eighth aspect of the invention, dependent on the sixth aspect or on the seventh aspect, relates to a frame (10), wherein said frame (10) comprises at least one constraining element, in particular at least one constraining element extending in substantially axial direction, in particular said frame (10) comprising a plurality of constraining elements, optionally wherein said at least one constraining element is configured to be accommodated within a hole (40) or through slot of said coating (1),
in particular wherein said at least one constraining element is integrated with said supporting element, in particular with said disc (29), in a monolithic piece, said monolithic piece also preferably integrating said crown (28), optionally wherein each constraining element of said plurality of constraining elements is integrated in said monolithic piece and/or
in particular wherein said at least one constraining element comprises a peg (50), in particular wherein said peg (50) comprises a substantially cylindrical body and a tapered free end, optionally wherein each constraining element of said plurality of constraining elements comprises a peg (50) and/or
in particular wherein said constraining elements are identical to each other in shape and/or size and/or in particular wherein, taking a first point belonging to said hub (25), a second point belonging to said at least one constraining element and an imaginary straight segment in conjunction with said first point with said second point, said imaginary segment intersects said at least one crown (28) and/or
in particular wherein said at least one constraining element, in particular peg (50), is located in the volume defined by a cavity of said plurality of cavities (15), in particular said at least one constraining element being located in a substantially central and/or substantially barycentric position with respect to the extension of said volume, optionally wherein the number of said constraining elements coincides with the number of said cavities (15), such that each of said constraining elements is located in the volume defined by the corresponding cavity of said plurality of cavities (15).

A ninth aspect of the invention, dependent on any one of the aspects from the sixth aspect to the eighth aspect, relates to a frame (10), wherein said supporting element comprises a disc (29) and wherein said hub (25) and said crown (28) project from a same face of said disc (29), optionally wherein said hub (25) and/or said crown (28) extend along a substantially axial direction and/or are substantially orthogonal to said disc (29), and/or
wherein said supporting element comprises, optionally in association with said disc (29), a plurality of reinforcing elements, said reinforcing elements being in particular ribs (23) and/or ridges and/or spokes and extending between said hub (25) and said crown (28) preferably in at least a partially radial direction, and/or
wherein said crown (28) is integrated with said supporting element, in particular with said disc (29), in a monolithic piece or wherein said crown (28) is rigidly constrained to said supporting element, in particular to said disc (29), by coupling means for example screws and/or welds and/or joints and/or magnetic elements and/or
wherein said crown (28) is substantially coaxial to said hub (25) and/or concentric to said supporting element, in particular to said disc (29) and/or
wherein said frame (10) is made of a rigid material, in particular plastic and/or plastic filled with glass and/or metal and/or a metal alloy, optionally wherein said frame (10) is made of polypropylene filled with glass, preferably polypropylene filled with 30% glass or made of iron or steel or aluminium or aluminium alloy and/or
wherein the extension in the radial direction of said supporting element, in particular of said disc (29), exceeds the extension in the radial direction of said crown (28), in particular wherein said crown (28) has a circumference length less than the circumference length of the end portion of said supporting element, in particular of said disc (29), and greater than half the circumference length of the end portion of said supporting element, in particular of said disc (29).

A tenth aspect of the invention relates to a wheel assembly (9) configured to allow the movement of a mobile device (100) by rolling said wheel assembly (9), in particular said mobile device (100) being a device for the maintenance of land, turfgrasses or gardens, said wheel assembly (9) comprising a frame (10) according to any one of the aspects from the sixth aspect to the ninth aspect and a coating (10) according to any one of the aspects from the first aspect to the fifth aspect, in particular wherein there is a condition of mutual engagement between the engagement elements of said frame (10), in particular of said crown (28) of said frame (10), and the engagement elements of said coating (1), in particular of said inner portion (2) of said coating (1).

An eleventh aspect of the invention, dependent on the tenth aspect, relates to a wheel assembly (9), wherein said lateral side walls (41, 42) of said teeth (4) of said coating (1) and said lateral side walls (14', 14") of said teeth (14) of said frame (10) are constrained to each other according to a primary constraint, said primary constraint being in particular a constraint in the tangential direction, in particular said tangential direction being substantially parallel to the rolling direction of said wheel assembly (9), optionally wherein the lateral side walls (41, 42) of said teeth (4) of said coating (1) and the lateral side walls (14', 14") of said teeth of said frame (10) are further constrained to each other according to a secondary constraint, said secondary constraint being in particular a constraint in the radial direction, in particular said radial direction being substantially perpendicular to the rolling direction of said wheel (9) or
wherein each tooth of said plurality of teeth (4) of said coating (1) is at least partially housed within a corresponding cavity of said plurality of cavities (15) of said frame (10) and wherein each tooth of said plurality of teeth (14) of said frame (10) is at least partially housed within a corresponding cavity of said plurality of cavities (5) of said coating (1) and/or
wherein each lateral side wall (41, 42) of the teeth (4) of said coating (1) is in contact with a lateral side wall (14', 14") of the teeth (14) of said frame (10), wherein each lateral side wall (41, 42) of the teeth (4) of said coating (1) is configured to exert a pressure against the adjacent lateral side wall (14', 14") of the teeth (14) of said frame (10) and/or wherein each lateral side wall (41, 42) of the teeth (4) of said coating (1) is configured to be capable of sliding radially along the adjacent lateral side wall (14', 14") of the teeth (14) of said frame (10) and/or
wherein, at least in a configuration of said wheel assembly (9) in conjunction with a condition of no load on said wheel assembly (9), the upper margin of at least one tooth of said plurality of teeth (4) of said coating (1) is positioned at a distance from the bottom margin of the corresponding cavity of said plurality of cavities (15) of said frame (10) and/or the upper margin of at least one tooth of said plurality of teeth (14) of said frame (1) is positioned at a distance from the bottom margin of the corresponding cavity of said plurality of cavities (5) of said coating (1) and/or
wherein each cavity of said plurality of cavities (15) of said frame (10) defines a respective inner volume, said inner volume being partially occupied by a corresponding tooth of said plurality of teeth (4) of said coating (1), wherein preferably the ratio between said inner volume and the volume occupied by said tooth is comprised between 1.01 and 1.5 and/or
wherein each cavity of said plurality of cavities (5) of said coating (1) defines a respective inner volume, said inner volume being partially occupied by a corresponding tooth of said plurality of teeth (14) of said frame (10), wherein preferably the ratio between said inner volume and the volume occupied by said tooth is comprised between 1.01 and 1.5 and/or
wherein said at least one constraining element, in particular peg (50), of said frame (10) is accommodated in said at least one hole or slot of said coating (1), optionally wherein each constraining element, in particular peg (50), of said plurality of constraining elements, in particular pegs, of said frame (10) is accommodated in a corresponding hole or slot of said plurality of holes (40) or slots of said coating (1), optionally wherein the extension in the radial direction of said at least one constraining element, in particular of said peg (50), more in particular of said body of said peg (50), of said frame (10) is smaller than the extension in the radial direction of said at least one hole or slot of said coating (1), optionally wherein the extension in the radial direction of each constraining element, in particular of each peg (50), more in particular of the body of each peg (50), of said frame (10) is smaller than the extension in the radial direction of each hole or slot of said plurality of holes or slots of said coating (1). A twelfth aspect of the invention, dependent on the tenth aspect or on the eleventh aspect, relates to a wheel assembly (9), wherein at least part of said coating (1) is configured to assume, in use, a compression configuration, said compression configuration causing a deformation, in particular a deformation in a direction perpendicular to a work surface on which the wheel assembly (9) is positioned, of at least one portion of said coating (1), namely wherein, in said compression configuration, at least one tooth of said plurality of teeth (4) of said coating (1) sinks and/or increases its penetration inside at least one cavity of said plurality of cavities (15) of said frame (10) and/or in particular wherein, in said compression configuration, the bottom margin of at least one cavity of said plurality of cavities (5) of said coating (1) approaches the upper margin of at least one tooth of said plurality of teeth (14) of said frame (10),
in particular wherein said coating (1) in said compression configuration has a greater contact surface with the ground, the contact surface increased in particular by increasing the capacity of adhesion to the ground and traction of said coating (1).

A thirteenth aspect of the invention, dependent on the twelfth aspect, relates to a wheel assembly (9), wherein at least part of said coating (1) is further configured to assume, in use, a release configuration, said release configuration determining a partial or total attenuation of said deformation, in particular of said deformation in a direction perpendicular to a work surface on which the wheel assembly (9) is positioned, of at least one portion of said coating (1), in particular wherein, in said release configuration, at least one tooth of said plurality of teeth (4) of said coating (1) emerges from inside at least one cavity of said plurality of cavities (15) of said frame (10) and/or in particular wherein, in said release configuration, the bottom margin of at least one cavity of said plurality of cavities (5) of said coating (1) extends away from the upper margin of at least one tooth of said plurality of teeth (14) of said frame (10),
in particular wherein said teeth (4) of said coating (1) in said release configuration are adapted to be limited in the movement of emerging from said cavities (15) of said frame (10) by the walls of said cavities (15) of said frame (10), said walls of said cavities (15) of said frame (10) partially interfering with the walls of said teeth (4) of said coating (1), in particular the upper margin of each tooth of said plurality of teeth (4) of said coating (1) being greater than the corresponding base and the open margin of each cavity of said plurality of cavities (15) of said frame (10) being smaller than the bottom margin of said cavity, preferably the volume of each cavity of said plurality of cavities (15) of said frame (10) being greater than the volume of each tooth of said plurality of teeth (4) of said coating (1) and
in particular wherein said teeth (4) of said coating (1) in said release configuration are adapted to be limited in the movement of emerging from said cavities (15) of said frame (10) by said constraining elements of said frame (10), in particular said constraining elements of said frame (10) being inserted inside said holes or slots, in particular the volume described by at least one hole or slot of said plurality of holes (40) or slots of said coating (1) being greater than the volume of the corresponding constraining element of said frame (10), optionally the volume described by at least one hole or slot of said plurality of holes (40) or slots of said coating (1) being greater than at least twice the volume of the corresponding constraining element of said frame (10) and/or
in particular wherein said coating (1) is configured to assume, in use, a release configuration of a portion of said coating (1) subsequent to a compression configuration of a portion of said coating (1), in particular said portion of said coating (1) being the same portion and/or
in particular wherein a succession of said compression configuration and said release configuration is capable of determining, in use, a plastic deformation of said coating (1), said plastic deformation in particular favouring the elimination of debris, for example earthy debris, possibly accumulated in said recesses (32) of said coating (1).

A fourteenth aspect of the invention, dependent on any one of the aspects from the tenth aspect to the thirteenth aspect, relates to a wheel assembly (9) further comprising a covering element (77) closing said wheel assembly (9), in particular wherein said covering element (77) is fixed to said frame (10) so as to form with said frame (10) a box-like structure having a compartment therein, said compartment being in particular delimited by said hub (25) of said frame (10), by said supporting element, in particular disc (29), of said frame (10), by said crown (28) of said frame (10) and by said covering element (77),
in particular wherein said covering element (77) comprises at least one auxiliary constraining element, in particular at least one auxiliary constraining element extending in a substantially axial direction, in particular said covering element (77) comprising a plurality of auxiliary constraining elements, optionally wherein said at least one auxiliary constraining element is accommodated inside a hole (40) or through slot of said coating (1) and/or
in particular wherein at least one weight (85) is accommodated in said compartment, optionally wherein said at least one weight (85) comprises at least one rigid material with high specific weight, for example iron, and/or optionally wherein said at least one weight (85) is shaped like a disc and/or
in particular wherein the extension in the radial direction of said covering element (77) exceeds the extension in the radial direction of said crown (28) of said frame (10), optionally wherein the extension in the radial direction of said covering element (77) is substantially equal to the extension in the radial direction of said supporting element, in particular of said disc (29), of said frame (10), optionally wherein a portion of said coating (1) is interposed between a peripheral portion of said covering element (77) and a peripheral portion of said frame (10), optionally wherein a portion of said coating (1) is interposed between a peripheral portion of said covering element (77) and a peripheral portion of said supporting element, in particular disc (29), of said frame (10), so as to suppress or limit the freedom of movement of said coating (1) in the axial direction.

A fifteenth aspect of the invention relates to a mobile device (100) configured to support and manage at least one payload, said at least one payload being rigidly and optionally removably constrained to said mobile device and being for example a cutting plate, wherein said mobile device comprises at least one wheel assembly (9) according to any one of the aspects from the tenth aspect to the fourteenth aspect, said at least one wheel assembly (9) being rotatably constrained to said mobile device (100), optionally wherein said wheel assembly (9) is rotatably constrained to a drive shaft or to an axle of a traction system of said mobile device (100), a bearing or a bushing being interposed between said drive shaft or said axle of said traction system and said hub (25) of said wheel assembly (9), and/or optionally wherein said mobile device (100) comprises at least a first wheel assembly and a second wheel assembly, said first wheel assembly and second wheel assembly being according to any one of claims 10 to 14 and being coaxial therebetween, in particular said first wheel assembly and second wheel assembly being mounted on said mobile device (100) as drive wheels.

Each of the aforesaid aspects of the invention can be taken alone or in combination with any of the claims or other aspects disclosed.

### BRIEF DESCRIPTION OF THE DRAWINGS

Some embodiments and aspects of the invention will be disclosed hereinafter with reference to the accompanying figures, given merely for illustrative, non-limiting purposes in which:
- Figure 1 depicts a side view of a mobile device, in the non-limiting form of a robot lawnmower, in accordance with the present invention and provided with a wheel assembly also in accordance with the present invention;
- Figure 2 depicts an axonometric view of a wheel assembly according to an embodiment in accordance with the present invention;
- Figure 3 depicts an exploded view of the wheel assembly of figure 2;
- Figure 4 depicts a front plan view of the wheel assembly of figure 2;
- Figure 5 depicts a detail of the wheel assembly of figure 2 in a different configuration with respect to that shown in figure 4;
- Figure 6 depicts an axonometric view of an embodiment variant of the wheel assembly of figure 2.

### DEFINITIONS AND CONVENTIONS

It should be noted that in the present detailed description, the corresponding parts illustrated in the various figures are indicated with the same numerical references. The figures could illustrate the object of the invention through non-scale depictions; therefore, the parts and components illustrated in the figures related to the object of the invention could exclusively relate to schematic depictions.

As will be clearer hereinafter, the present disclosure relates to components having a substantially circular or cylindrical shape.

With regard to the aforesaid substantially circular/cylindrical components, the terms "radial" / "radially" are intended as a direction which joins the centre of the aforesaid component and the outer edge of the component itself. Therefore, the expression "(at least partially) radial direction" is intended as a direction through the centre and an external point of the reference component. In accordance with the above, the expressions "inner", "outer" or similar expressions are also to be understood as referring to the radial direction and distance with respect to the centre of the component, where an inner position is closer to the centre of the component with respect to an outer position.

Similarly, the expressions "circumferentially", "circumferential direction" or similar expressions refer to a circular direction at the outer edge of the relative circular/cylindrical component or an inner concentric direction. Similarly, the expression "(at least partially) tangential direction" is intended as a direction locally tangential to the circular/cylindrical extension of the reference component.

The expressions "axial direction" and "axially" refer to a direction coincident or parallel to an axis of circular symmetry of the aforesaid component having a substantially circular or cylindrical shape.

### DETAILED DESCRIPTION

The present invention relates to a coating for wheels with a considerably improved traction capacity and adhesion to the ground, especially in critical conditions such as sloping ground, uneven ground or wet or muddy ground; furthermore, the coating for wheels has a self-cleaning capacity from any debris which can accumulate between its plugs, for example in rainy weather conditions and partially dirt ground, muddy debris can accumulate between the plugs of the coating, according to the present invention such muddy debris is expelled from the recesses of the coating thanks to its particular technical features and its particular operation.

The present invention further relates to a relative wheel frame, adapted to support a coating for wheels, in addition such frame is configured to favour the operation of the coating for wheels, thus it is configured to work in synergy with the coating for wheels in order to achieve the best traction and cleaning abilities, the particular configuration of the frame and its technical features are specifically designed to favour the operation of the coating for wheels.

The present invention further relates to a wheel assembly, consisting at least of a coating for wheels and a frame for wheels between which there is a condition of mutual commitment; advantageously such wheel assembly is particularly adapted to be mounted on maintenance devices of outdoor areas. The present invention further relates to a mobile device for supporting and managing at least one payload such as, for example, a device for maintaining outdoor areas supporting a cutting plate. In particular, the mobile device according to the present invention comprises at least one wheel assembly rotatably constrained to the mobile device itself.

The present invention further relates to a rolling method of at least one wheel assembly, for operating the movement of a mobile device, for example a device for maintaining outdoor areas; said method is carried out during the driving or navigation of such device, achieving particular technical advantages which will be better disclosed below.

### Coating for wheels

With reference to the accompanying drawings, a coating for wheels to be used in the context of a wheel assembly 9 has been indicated with the reference "1", as will be clearer hereinafter in the present disclosure.

In the present disclosure, the term "coating for wheels" is intended as the portion located most radially outwards and, consequently, the portion in contact with the ground during the rolling of the relative wheel. In the technical field, the coating is also referred to as tread.

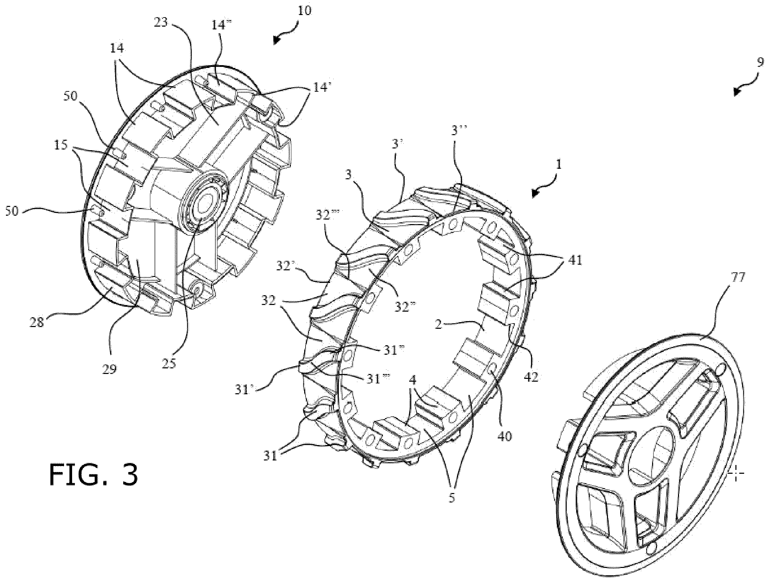

As clearly shown in figure 3, the coating 1 for wheels has a hollow cylindrical configuration and extends radially between an inner portion 2 and an outer portion 3. On the one hand, said outer portion 3 is configured to act as a tread element and in particular gives said coating 1 the ability to maintain, in use, contact with the ground. On the other hand, said inner portion 3 is configured to define a plurality of engagement elements.

As will become clearer hereinafter, said engagement elements are in particular configured to provide an interference-type coupling between said coating 1 and an element of a frame 10 for wheels, in particular an interference-type coupling such as to generate, between said coating 1 and said element of said frame 10, forces in an at least partially tangential direction.

In the embodiment illustrated in the accompanying figures, said engagement elements comprise a plurality of teeth 4 and define a plurality of cavities 5, in particular a plurality of cavities 5 open inwards, i.e., in a radial direction which goes from the outer surface 3 to the inner surface 2. In other words, said teeth 4 emerge from a surface of said inner portion 2 away from said outer portion 3.

In their circumferential extension along the inner portion 2, said teeth 4 alternate with said cavities 5 so that two consecutive teeth of said plurality of teeth 4 are separated by a cavity of said plurality of cavities 5. Optionally, the teeth 4 and the cavities 5 have a spatial periodicity.

Preferably, the coating 1 is formed by a monolithic piece, in particular in which said engagement elements, in particular said teeth 4, are made in a single body with said inner portion 2. By way of absolutely non-limiting example, said coating 1 comprises a plurality of pieces constrained together by means of welding and/or adhesive elements and/or constraining elements and/or interlocking elements.

Always preferably, taking a tooth of said plurality of teeth 4 and taking a cavity of said plurality of cavities 5, the ratio between the extension in the radial direction of said coating at said tooth 4 and the extension in the radial direction of said coating at said cavity 5 is comprised between 1.9 and 2.7, even more preferably equal to 2.5 or close to 2.5.

In the illustrated embodiment, said teeth 4 substantially have the same extension in the radial direction. In other embodiments not illustrated but regardless in accordance with the present invention, taking a first tooth and a second tooth of said plurality of teeth 4, the extension in the radial direction of said first tooth differs from the extension in the radial direction of said second tooth.

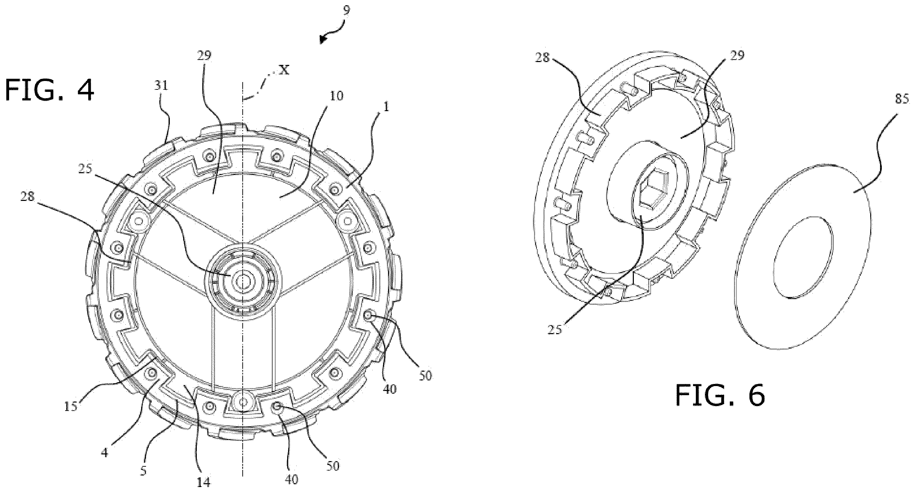

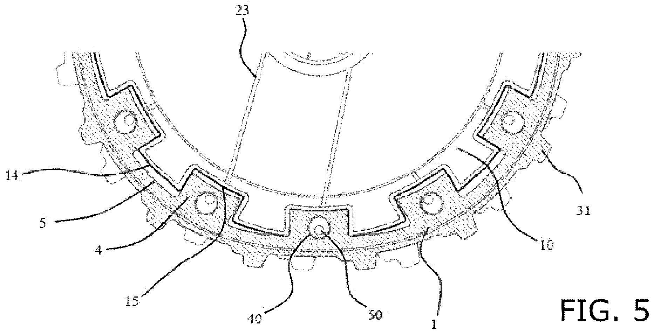

With reference to the front view of figures 4 and 5, taking a tooth of said plurality of teeth 4 and taking a cavity of said plurality of cavities 5, said tooth extends circumferentially for a first angular amplitude and said cavity extends circumferentially for a second angular amplitude.

Preferably, the value of the first angular amplitude is smaller than the value of the second angular amplitude. In other words, the teeth 4 have a more limited extension in the circumferential direction with respect to the extension in the circumferential direction of the cavities 5.

That said, suitable values of the ratio of the first angular amplitude to the second angular amplitude are comprised between 0.1 and 2.8, in particular between 0.5 and 2, more in particular between 0.5 and 1.5, still more in particular between 0.5 and 0.9.

In the illustrated embodiment, said teeth 4 substantially have the same extension in the circumferential direction. In other embodiments not illustrated but regardless in accordance with the present invention, taking a first tooth and a second tooth of said plurality of teeth 4, the extension in the circumferential direction of said first tooth differs from the extension in the circumferential direction of said second tooth.

In the illustrated embodiment, said cavities 5 substantially have the same extension in the circumferential direction. In other embodiments not illustrated but in accordance with the present invention, taking a first cavity and a second cavity of said plurality of cavities 5, the extension in the circumferential direction of said first cavity differs from the extension in the circumferential direction of said second cavity.

As clearly shown in figure 4, the coating 1 describes an ideally axial-symmetrical shape. Specifically, the coating 1 is ideally symmetrical with respect to an axis X passing through the central point of the circumference described by the outer edge of said coating 1, and a central point of a tooth of said plurality of teeth 4 or of a cavity of said plurality of cavities 5.

Preferably, the number of teeth 4 is comprised between 4 and 20, more preferably between 10 and 14. In the illustrated embodiment, the number of teeth 4 is equal to 12.

Preferably, said teeth 4 have a substantially square or rectangular or trapezoidal or polygonal or circular or elliptical shape. In the illustrated embodiment, the teeth 4 have a substantially rectangular shape. More preferably, the teeth 4 are identical to each other in shape and/or size.

Always preferably, said cavities 5 have a substantially square or rectangular or trapezoidal or polygonal or circular or elliptical shape. In the illustrated embodiment, the cavities 5 have a substantially rectangular shape.

Optionally, at least one tooth of said plurality of teeth 4 has a first lateral side 41 extending along a predefined extension direction. In particular, said extension direction of the first lateral side 41 defines with the radial direction an angle less than 20°, preferably an angle comprised between 0.1° and 5°, more preferably an angle of about 1°.

Similarly, at least one tooth of said plurality of teeth 4 further has a second lateral side 42 opposite said first lateral side 41 and substantially symmetrical with respect to said first lateral side 41. In other words, said tooth has a specular conformation with respect to a radial plane.

As shown in the accompanying drawings, in at least one tooth of said plurality of teeth 4, at least one through hole 40 or slot is obtained, in particular a cylindrical hole extending in a substantially axial direction. As will be clearer hereinafter, said hole 40 or slot is in particular configured to accommodate a constraining element of said frame 10. Preferably, said hole 40 or slot is located in a substantially central and/or substantially barycentric position with respect to the extension of the respective tooth 4. Said holes or slots extending in height in the axial direction and extending in width in the circumferential direction. The holes and slots differ for their conformation. The holes describe a substantially cylindrical volume therein with the height of the cylinder being parallel to the axial direction while the width of the cylinder is defined as the diameter of the circumference obtained by sectioning the hole perpendicularly to the height. The slots have an elliptical cylinder shape in which the height is parallel to the axial direction while the width coincides with the largest diameter of the ellipse obtained by sectioning the slot perpendicularly to the height.

In the illustrated embodiment, the coating 1 has a plurality of through holes 40 or slots, in particular configured to accommodate constraining elements of said frame 10. In particular, in the coating 1 illustrated, the number of said holes 40 or slots coincides with the number of said teeth 4, so that in each tooth of said plurality of teeth 4 a hole or slot of said plurality of holes 40 or slots is obtained.

Preferably, said holes 40 or slots are identical to each other in shape and/or size.

In the illustrated embodiment, in a disassembled condition of said coating (figure 3) and optionally also in an assembled condition of said coating to said frame 10 (figures 4 and 5), the upper margin of each tooth of said plurality of teeth 4 has a greater extension with respect to the corresponding base. Similarly, the open margin of each cavity of said plurality of cavities 5 has a smaller extension with respect to the corresponding bottom margin.

As shown in the accompanying drawings, said outer portion 3 comprises a plurality of plugs 30, in particular configured to confer traction and adhesion to the ground to the coating 1. Preferably, the plugs 30 extend in an at least partially radial direction away from the inner portion 2.

A corresponding recess 32 is obtained between two consecutive plugs 30. Therefore, said outer portion 3 comprises a plurality of recesses 32, in particular configured to ensure the drainage of liquid elements and/or the passage of solid debris.

Preferably, at least one plug of said plurality of plugs 31 extends on a surface of said outer portion 3 starting from an end side margin 3' up to an opposite end side margin 3". Similarly and always preferably, at least one recess of said plurality of recesses 32 extends on the surface of said outer portion 3 starting from an end side margin 3' up to an opposite end side margin 3". In the illustrated embodiment, all the plugs 31 and all the recesses 32 extend on the surface of said outer portion 3 starting from said end side margin 3' up to said opposite end side margin 3".

Optionally, as illustrated in the accompanying figures, at least one plug of said plurality of plugs 31 has an at least partially curvilinear trend. Similarly and always optionally, at least one recess of said plurality of recesses 32 has an at least partially curvilinear trend.

As shown in figure 3, at least one plug of said plurality of plugs 31 exhibits a first curvature 31' and a second curvature 31" so as to describe a substantially S-shape. Specifically, the transition between said first curvature 31' and said second curvature 31" occurs at a flex point 31‴. Optionally, the distance between said flex point 31‴ and said end side margin 3' is substantially equal to the distance between said flex point 31‴ and said opposite end side margin 3".

As illustrated always in figure 3, at least one recess of said plurality of recesses 32 exhibits a first curvature 32' and a second curvature 32" so as to describe a substantially S-shape. In particular, the transition between said first curvature 32' and said second curvature 32" occurs at a flex point 32"'.

Optionally, the distance between said flex point 32‴ and said end side margin 3' is substantially equal to the distance between said flex point 32‴ and said opposite end side margin 3".

In the embodiment shown in the accompanying drawings, all the plugs 31 and, similarly, all the recesses 32 are identical to each other in shape and/or size.

Preferably, the coating 1 is made of plastic material and/or rubbery material.

In an embodiment, the coating 1 is made of a thermoplastic elastomer with a hardness comprised between 40 and 90 shore, preferably comprised between 60 and 80 shore, more preferably equal to 75 shore.

Preferably, the diameter of said coating is comprised between 50 mm and 500 mm, more preferably comprised between 100 mm and 300 mm.

### Frame for coating for wheels

With reference to the accompanying drawings, a frame for wheels to be used in the context of a wheel assembly 9 has been indicated with the reference "10", as will be clearer hereinafter in the present disclosure.

As illustrated, said frame 10 comprises a hub 25, a crown 28 and at least one supporting element. Said hub 25 is configured to be coupled to a drive shaft or to an axle of a traction system, of known type and therefore not described in detail.

Said crown 28 is configured to act as a support element for said coating 1 when said coating 1 is applied to said frame 10 so as to externally encircle said crown 28. As shown in the accompanying drawings, said crown 28 is arranged peripherally with respect to said hub 25.

Said supporting element operates in connection between said hub and said crown and is in particular configured to confer structural strength to said frame.

As shown for example in figure 3, said crown 28 is configured to define a plurality of engagement elements. Said engagement elements are in particular configured to make an interference-type coupling between said frame 10 and said coating 1, in particular an interference-type coupling such as to generate, between said frame 10 and said coating 1, forces in an at least partially tangential direction.

In the illustrated embodiment, the supporting element comprises a disc 29. In such an embodiment, said hub 25 and said crown 29 project from the same face of said disc 29, extend along a substantially axial direction and/or are substantially orthogonal to said disc 29.

Preferably, said supporting element comprises, optionally in association with said disc 29, a plurality of reinforcing elements 23. In the embodiment shown, the plurality of reinforcing elements comprise ribs 23 extending between said hub 25 and said crown 28 in an at least partially radial direction. In other embodiments, said plurality of reinforcing elements can comprise one or more of the following elements: ribs, ridges, spokes.

In the embodiment shown, said crown 28 is integrated with said supporting element, in particular with said disc 29, in a monolithic piece. In other embodiments not illustrated but regardless in accordance with the present invention, said crown 28 is rigidly constrained to said supporting element, in particular to said disc 29, by coupling means, for example screws and/or welds and/or joints and/or magnetic elements.

Preferably, as clearly shown in figure 3, the extension in the radial direction of said supporting element, in particular of said disc 29, exceeds the extension in the radial direction of said crown 28. In other words, said crown 28 preferably has a circumferential length which is less than the circumferential length of the end portion of said supporting element, in particular of said disc 29. Always preferably, said crown 28 has a circumferential length which is greater than the circumferential length of the end portion of said supporting element, in particular of said disc 29.

According to what is illustrated, said crown 28 is substantially coaxial to said hub 25 and/or concentric to said supporting element, in particular to said disc 29.

In the frame 10 in accordance with the accompanying drawings, said engagement elements comprise a plurality of teeth 14 and define a plurality of cavities 15, in particular a plurality of cavities 15 open outwards. Specifically, said teeth 14 emerge from a surface of said crown 28 away from said hub 25 and alternate with said cavities 15, so that two consecutive teeth of said plurality of teeth 14 are separated by a cavity of said plurality of cavities 15. Optionally, the teeth 14 and said cavities 15 have a spatial periodicity.

Preferably, taking a tooth of said plurality of teeth 14 and taking a cavity of said plurality of cavities 15, the ratio between the distance between the axis of said frame 10 and a point belonging to a facing surface of said crown 28 at said tooth 14 and the distance between the axis of said frame 10 and a point belonging to a facing surface of said crown 28 at said cavity 15 is comprised between 1.05 and 1.4, preferably comprised between 1.1 and 1.3.

In the illustrated embodiment, said teeth 14 substantially have the same extension in the radial direction. In other embodiments not illustrated but regardless in accordance with the present invention, taking a first tooth and a second tooth of said plurality of teeth 14, the extension in the radial direction of said first tooth differs from the extension in the radial direction of said second tooth.

Preferably, said teeth 14 and/or said cavities 15 have a substantially square or rectangular or trapezoidal or polygonal or circular or elliptical shape. Preferably, said teeth 14 and/or said cavities 15 are identical to each other in shape and/or size.

As illustrated in figures 4 and 5, the upper margin of each tooth of said plurality of teeth 14 has a greater extension with respect to the corresponding base. Similarly, the open margin of each cavity of said plurality of cavities 15 has a smaller extension with respect to the corresponding bottom margin. As clearly shown in figure 4, said crown 28 describes an ideally axial-symmetrical shape. More in general, the entire frame 10 describes an ideally axial-symmetrical shape. In particular, the frame 10 is ideally symmetrical with respect to an axis X passing through the central point of the circumference described by said frame 10 and a central point of a tooth of said plurality of teeth 14 or of a cavity of said plurality of cavities 15.

Optionally, at least one tooth of said plurality of teeth 14 has a first lateral side 14' extending along a predefined extension direction. Said extension direction defining with the radial direction an angle less than 20°, preferably comprised between 0.1° and 10°, more preferably of about 1°. Similarly, said at least one tooth of said plurality of teeth 14 further has a second lateral side 14" opposite said first lateral side 14' and substantially symmetrical with respect to said first lateral side 14'.

As anticipated in the section regarding the coating 1, the frame 10 comprises at least one constraining element, in particular at least one constraining element extending in a substantially axial direction. Preferably, the frame 10 comprises a plurality of constraining elements. Specifically, said at least one constraining element is configured to be housed within a through hole 40 or slot of said coating 1. Optionally, said at least one constraining element is integrated with said supporting element, in particular with said disc 29, in a monolithic piece. In the illustrated embodiment, said monolithic piece also integrates said crown 28 and each constraining element of said plurality of constraining elements is integrated in said monolithic piece.

In the illustrated embodiment, said at least one constraining element comprises a peg 50. As shown for example in figure 3, each constraining element of said plurality of constraining elements comprises a peg 50 having a substantially cylindrical body and a tapered free end.

Optionally, said constraining elements are identical to each other in shape and/or size.

As can clearly be verified in figure 4, taking a first point belonging to said hub 25, a second point belonging to said at least one constraining element (peg 50) and an imaginary straight segment in conjunction with said first point with said second point, said imaginary segment intersects said at least one crown 28.

Said at least one constraining element, in particular peg 50, is preferably located in the volume defined by a cavity of said plurality of cavities 15, more preferably in a substantially central and/or substantially barycentric position with respect to the extension of said volume.

In the embodiment shown, the number of said constraining elements (pegs 50) coincides with the number of said cavities 15, so that each of said constraining elements is located in the volume defined by the corresponding cavity of said plurality of cavities 15.

Preferably, said frame 10 is made of a rigid material, in particular plastic and/or plastic filled with glass and/or metal and/or a metal alloy.

According to an embodiment, said frame 10 is made of polypropylene filled with glass, for example polypropylene filled with 30% glass.

According to another embodiment, said frame 10 is made of iron or steel or aluminium or aluminium alloy.

### Wheel assembly

The present disclosure has as a further object a wheel assembly, overall indicated with the reference "9" in the accompanying drawings. Said wheel assembly 9 is configured to allow the movement of a mobile device 100 by rolling said wheel assembly 100. By way of example, said mobile device 100 is a device for the maintenance of land, turfgrass or gardens.

The wheel assembly 9 comprises the frame 10 and the coating 1 described above.

In the assembled wheel assembly 9 there is a condition of mutual engagement between the engagement elements of said frame 10, in particular of said crown 28 of said frame, and the engagement elements of said coating 1, in particular of said inner portion 2 of said coating 1.

As illustrated in figure 4, each tooth of said plurality of teeth 4 of said coating 1 is at least partially housed within a corresponding cavity of said plurality of cavities 15 of said frame 10 and in which each tooth of said plurality of teeth 14 of said frame 10 is at least partially housed within a corresponding cavity of said plurality of cavities 5 of said coating 1. In particular, each first lateral side 41 of the teeth 4 of said coating 1 is in contact with a first lateral side 14' of the teeth 14 of said frame 10. Similarly, each second lateral side 42 of the teeth 4 of said coating 1 is in contact with a second lateral side 14" of the teeth 14 of said frame 10

In particular, each lateral side 41, 42 of the teeth 4 of said coating 1 is configured to exert a pressure against the adjacent lateral side 14', 14" of the teeth 14 of said frame 10. Specifically, each lateral side 41, 42 of the teeth 4 of said coating 1 is configured to be capable of sliding in a radial direction along the adjacent lateral side 14', 14" of the teeth 14 of said frame 10.

Each cavity of the plurality of cavities 15 of the frame 10 defines a respective inner volume, which is partially occupied by a corresponding tooth of the plurality of teeth 4 of the coating 1. A possible ratio between said inner volume and the volume occupied by said tooth 4 is comprised between 1.01 and 1.5.

Similarly, each cavity of the plurality of cavities 5 of the coating 1 defines a respective inner volume, which is partially occupied by a corresponding tooth 14 of the frame 10. A possible ratio between said inner volume and the volume occupied by said tooth is comprised between 1.01 and 1.5.

In at least one configuration of said wheel assembly in conjunction with a no load condition on said wheel assembly 9, illustrated for example in figure 4, the upper margin of at least one tooth of said plurality of teeth 4 of said coating 1 is positioned at a distance from the bottom margin of the corresponding cavity of said plurality of cavities 15 of said frame 10. In a substantially specular manner, the upper margin of at least one tooth of said plurality of teeth 14 of said frame 10 is positioned at a distance from the bottom margin of the corresponding cavity of said plurality of cavities 5 of said coating 1. In other words, in a configuration of said wheel assembly in conjunction with an no load condition on said wheel assembly 9, the teeth 4 of the coating 1 are not in contact with the cavities 15 of the crown 28 and, similarly, the teeth 14 of the crown 28 are not in contact with the cavities 5 of the coating 1.

As illustrated in figures 4 and 5, at least one constraining element, in particular peg 50, of said frame 10 is accommodated in said at least one hole 40 or slot of said coating 1. Specifically, each constraining element, in particular peg 50, of said plurality of constraining elements of said frame 10 is accommodated in a corresponding hole 40 of said coating 1.

As clearly shown in the detail of figure 5, the extension in the radial direction of said constraining element, in particular of said peg 50, even more in particular of the body of said peg, of said frame 10 is smaller than the extension in the radial direction of the relative hole 40 or slot of said coating. In other words, the peg 50 has a certain degree of freedom of movement, in a radial and/or circumferential direction, inside the relative hole 40.

As illustrated in figure 5, at least part of said coating 1 is configured to assume, in use, a compression configuration. Said compression configuration determines a deformation, in particular a deformation in a direction perpendicular to a work surface on which the wheel assembly 9 is positioned, of at least one portion of said coating 1. In particular, in said compression configuration, at least one tooth 4 of said coating 1 sinks and/or increases its penetration within the respective cavity 15 of said frame 10. Consequently, in said compression configuration, also the bottom margin of at least one cavity 5 of said coating 1 approaches the upper margin of at least one tooth 14 of said frame 10. Advantageously, in said compression configuration, said coating 1 has a greater contact surface with the ground, and such increased contact surface increases the capacity of adhesion to the ground and traction of said coating 1.

As shown in figure 4, said coating is configured to assume, in use, also a release configuration. Specifically, said release configuration determines a partial or total attenuation of said deformation of at least one portion of said coating 1, in particular of said deformation in a direction perpendicular to a work surface on which the wheel assembly 9 is positioned.

As shown in figure 4, in said release configuration, at least one tooth of said plurality of teeth 4 of said coating 1 emerges from the inside of at least one cavity of said plurality of cavities 15 of said frame 10, i.e., the tooth 4 is not in contact with the respective cavity 15. Similarly, in said release configuration, the bottom margin of at least one cavity 5 of said coating 1 moves away from the upper margin of at least one tooth 14 of teeth said frame 10.

In said release condition, the teeth 4 of the coating 1 are adapted to be limited in the movement of emerging from the respective cavities 15 of said frame 10 due to walls of said cavities. Specifically, since the upper margin of each tooth 4 of the coating 1 is greater with respect to the corresponding base and the open margin of each cavity 15 of said frame 10 is smaller with respect to the respective bottom margin, said walls of said cavities 15 of said frame 10 come into partially interference with the walls of said teeth 4 of said coating 1.

Preferably, the volume of each cavity 15 of said frame 10 is greater with respect to the volume of each tooth 4 of said coating 1 so that the tooth 4 can move, at least in a radial direction, within the corresponding cavity 15.

Furthermore, in said release configuration, said teeth 4 of said coating 1 are adapted to be limited in the movement of emerging from said cavities 15 of said frame 10 by said constraining elements of said frame. In particular, since the volume of said hole 40 or slot is greater with respect to the volume of the corresponding constraining element, said constraining elements of said frame 10 have a certain freedom of movement within the respective hole 40 or slot. Consequently, also the coating 1 has a certain freedom of movement with respect to the frame 10.

Preferably, the volume described by said hole or slot of said plurality of holes 40 or slots of said coating is greater than at least twice the volume of the corresponding constraining element of said frame 10. As shown in figure 4, a same portion of said coating 1 is configured to assume, in use, a release configuration (figure 4) subsequent to a compression configuration (figure 5) or vice versa. In other words, said coating 1 has an at least partially elastic behaviour.

Advantageously, a succession of said compression configuration and said release configuration is capable of determining, in use, a plastic deformation of said coating 1, capable of favouring the elimination of debris, for example earthy debris, possibly accumulated in said recesses 32 of said coating 1.

As illustrated in figure 4, the lateral sides 41, 42 of said teeth 4 of said coating 1 and the lateral sides 14', 14" of said teeth 14 of said frame 10 are constrained to each other according to a primary constraint. Said primary constraint is in particular a constraint in a tangential direction. Specifically, said tangential direction is substantially parallel to the rolling direction of said wheel assembly 9. In other words, the primary constraint inhibits the mutual rotation between the coating 1 and the frame 10, i.e., the sliding of the coating 1 on the frame 10.

Optionally, as still illustrated in figure 4, the lateral sides 41, 42 of said teeth 4 of said coating 1 and the lateral sides 14', 14" of said teeth 14 of said frame 10 are further constrained to each other according to a secondary constraint. Said secondary constraint is in particular a constraint in a radial direction. Specifically, said radial direction is substantially perpendicular to the rolling direction of said wheel assembly 9. In other words, the secondary constraint inhibits the teeth 4 of the coating 1 from exiting from the respective cavities 15 of the frame and the teeth 14 of the frame 10 from exiting from the respective cavities 5 of the coating 1.

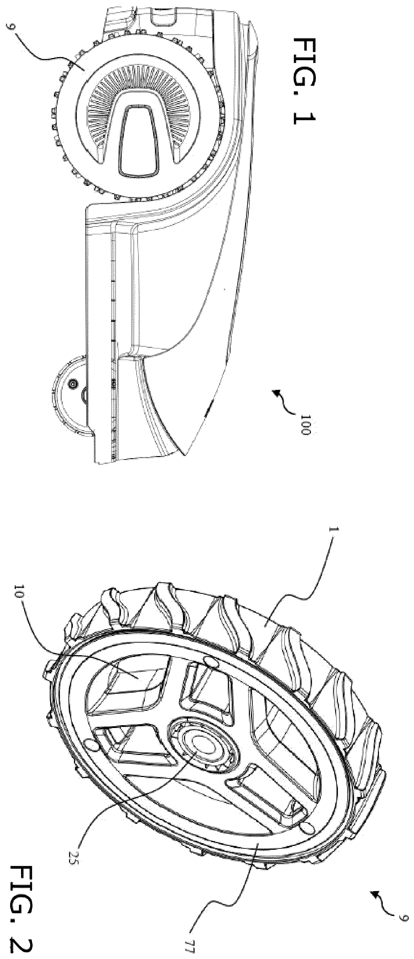

Preferably, as shown in figures 2 and 3, the wheel assembly 9 further comprises a covering element 77 for closing said wheel assembly.

Said covering element 77 is fixed to said frame 10 so as to form with said frame 10 a box-like structure having a compartment therein. Specifically, said compartment is delimited by said hub 25, by said supporting element, in particular disc 29, by said crown 28 and by said covering element 77. Preferably, the extension in the radial direction of said covering element 77 exceeds the extension in the radial direction of said crown 28 of said frame 10. More preferably, as in the illustrated embodiment, the extension in the radial direction of said covering element 77 is substantially equal to the extension in the radial direction of said supporting element, in particular of said disc 29, of said frame 10.

With an assembled wheel assembly 9, a portion of said coating 1 is interposed between a peripheral portion of said covering element 77 and a peripheral portion of said frame 10, in particular a peripheral portion of said disc 29. Advantageously, said portion of the coating 1 is closed between said covering element 77 and said disc 29 so as to suppress or limit the freedom of movement of said coating 1 in the axial direction. Thereby, the possibility that the coating 1 dislodges from said frame 10 by moving in an axial direction is inhibited.

Preferably, said covering element 77 comprises at least one auxiliary constraining element. Preferably, said covering element 77 comprises a plurality of auxiliary constraining elements.

Always preferably, said at least one auxiliary constraining element extends in a substantially axial direction

Optionally, with an assembled wheel assembly 9, said at least one auxiliary constraining element is accommodated inside a through hole 40 or slot of said coating 1. In other words, the auxiliary constraining element is configured to be inserted inside said at least one hole 40 or slot of the coating 1.

In an embodiment, depicted in figure 6, the wheel assembly comprises at least one weight 85. Said at least one weight 85 is housed in said compartment defined by said covering element 77 and said frame 10.

Preferably, said at least one weight 85 comprises at least one rigid material with high specific weight, for example iron.

In the embodiment of figure 6, said at least one weight 85 is shaped like a disc. However, the disc 85 can take other forms not illustrated but still in accordance with the present invention.

### Mobile device

With reference to figure 1, a mobile device, also the object of the present description, has been indicated with 100. Said mobile device 100 is configured to support and manage at least one payload. Said at least one payload is rigidly and optionally removably constrained to said mobile device 100 and can for example be a cutting plate. In figure 1 the mobile device 100 is depicted in the form of a robot lawnmower.

The mobile device 100 comprises at least one wheel assembly 9 in accordance with what has previously disclosed. In particular, said at least one wheel assembly 9 is rotatably constrained to said mobile device 100.

Preferably, as illustrated in figure 1, said at least one wheel assembly 9 is rotatably constrained to a drive shaft or to an axle of a traction system of said mobile device 100. Optionally, a bearing or a bushing is interposed between said drive shaft or said axle of said traction system and said hub 25. In a preferred embodiment, the mobile device 100 comprises at least two wheel assemblies 9, specifically at least a first wheel assembly and a second wheel assembly. Preferably, said first wheel assembly and second wheel assembly are coaxial with each other, in particular said first wheel assembly and second wheel assembly are mounted on said mobile device 100 as drive wheels.

### Rolling method

The present description has as a further object a rolling method of at least one wheel assembly 9 in accordance with what was previously disclosed. Said wheel assembly 9 is configured to operate a movement, in particular a movement in a navigation direction on a work surface, of the mobile device 100 to which said at least one wheel assembly 9 is rotatably constrained. As mentioned above, in the illustrated embodiment, said mobile device 100 is a robot lawnmower configured for the maintenance of land, turfgrass or gardens.

In its essential elements, said rolling method comprises at least the steps of:
A. triggering the movement of said mobile device 100, activating the rolling of said wheel assembly 9 on the ground, in particular in said navigation direction;
B. applying to the hub 25 of said wheel assembly 9 a force in a direction substantially perpendicular to the ground, in particular to said work surface, in particular said force being a weight force;
C. compressing the portion of said coating 1 of said wheel assembly 9 in contact with the ground, in particular with said work surface, in particular increasing the resting surface of said coating 1 to the work surface so as to improve the traction capacity and adherence to the ground of said coating 1;
D. releasing the previously compressed portion of said coating 1.

In particular, the aforesaid steps C. and D. determine a plastic deformation of said outer portion 3 of said coating 1. In particular, said plastic deformation favours the elimination of debris, for example earthy debris, possibly accumulated in said recesses 32 of said coating 1.

Preferably, in said step C., the movement of at least one tooth of said plurality of teeth 4 of said coating 1 is constrained in particular by means of at least one constraining element, in particular by means of at least one peg 50, of said supporting element, in particular disc 29, of said frame 10.

In particular, the rolling method envisages that said at least one constraining element, in particular said at least one peg 50, of said supporting element, in particular disc 29, of said frame 10 is accommodated in a corresponding hole 40 or slot of the tooth 4 of said coating 1.

Said rolling method preferably envisages that said at least one tooth of said plurality of teeth 4 of said coating 1 is constrained to remain within the volume defined by the corresponding cavity of said plurality of cavities 15 of said frame 10.

The invention thus conceived is susceptible to numerous modifications and variations, all falling within the scope of the inventive concept, and the components cited can be replaced by other technically equivalent elements.

### ADVANTAGES OF THE INVENTION

The invention achieves important advantages with respect to the known wheel assembly solutions adopted to date.

Firstly, the coating 1, the frame 10, the wheel assembly 9, the mobile device 100 and the rolling method disclosed above allow to provide a larger ground contact surface and an ability to remove debris from the surface of the coating. In particular, the conformation of the coating 1 and the particular association with the frame 10 allow the coating itself to deform so as to offer an increased surface of adhesion to the ground and an improved traction, especially in critical conditions such as sloping ground, uneven ground or wet or muddy ground. Consequently, the coating 1 and the wheel assembly 9 implementing such coating 1 are well adapted to mobile devices 100 configured to move on low-adhesion surfaces. Furthermore, the deformability of the coating 1 and the particular association with the frame 10 allow the removal of debris from the surface of the coating itself without the intervention of an operator and without the need to use tools which can cause damage, as well as requiring the continuous attention of a human operator and his/her intervention to ensure the cleanliness of the wheel assembly.

The wheel assembly 9 thus conceived further highlights the aforementioned advantages when used on uneven and muddy ground, such as grounds, lawns or gardens, and is therefore well suited to be adopted in the context of a mobile device 100 in the form of a robot lawnmower or similar outdoor area maintenance device.

Another advantage of the present invention relates to minimizing navigation stops or slippage of a mobile device 100. In particular, the increased adherence and self-cleaning ability offered by the coating 1 allows the mobile device 100 to provide high reliability and efficiency, as an optimal grip on the ground is ensured and, at the same time, the probability of blockage in the working area due to the accumulation of debris is minimized.

A further advantage of the present invention is that of providing a wheel assembly with particularly simplified mounting. In fact, the conformation of the coating 1 and the frame 10 make the mutual association and centring of the coating 1 on the frame 10 simple and immediate.

Yet another advantage comes from the possibility of only replacing the coating 1 when the latter is damaged or worn, with consequent advantages in terms of maintenance costs of the mobile device 100 in which at least one wheel assembly 9 is used.

Another advantage of the present invention is represented by the simple and rational structure of the coating 1, of the frame 10 and of the wheel assembly 9, the production of which is particularly simple and economical.

## Claims

1. Coating (1) for wheels, said coating (1) having a hollow cylindrical configuration and extending radially between an inner portion (2) and an outer portion (3), said outer portion (3) being configured to act as a tread element,
wherein said inner portion (2) is configured to define a plurality of engagement elements, said engagement elements being in particular configured to make an interference-type coupling between said coating (1) and an element of a frame (10) for wheels,
said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5),
wherein, taking a tooth of said plurality of teeth (4) and taking a cavity of said plurality of cavities (5), said tooth extends circumferentially for a first angular amplitude and said cavity extends circumferentially for a second angular amplitude, and
wherein a ratio of said first angular amplitude to said second angular amplitude is comprised between 0.1 and 2.8, in particular between 0.5 and 2, more in particular between 0.5 and 1.5, still more in particular between 0.5 and 0.9.

2. Coating (1) for wheels, said coating (1) having a hollow cylindrical configuration and extending radially between an inner portion (2) and an outer portion (3), said outer portion (3) being configured to act as a tread element,
wherein said inner portion (2) is configured to define a plurality of engagement elements, said engagement elements being in particular configured to make an interference-type coupling between said coating (1) and an element of a frame (10) for wheels,
said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5) and
wherein at least one hole (40) or a through slot is obtained in at least one tooth of said plurality of teeth (4), in particular a cylindrical hole extending in a substantially axial direction, said hole (40) or slot being in particular configured to accommodate a constraining element of said frame (10), in particular said hole or slot being located in a substantially central and/or substantially barycentric position with respect to the extension of said at least one tooth,
in particular wherein said coating (1) has a plurality of holes (40) or through slots, said holes (40) or slots being in particular configured to accommodate constraining elements of said frame (10) and wherein the number of said holes (40) or slots coincides with the number of said teeth (4), so that a hole or slot of said plurality of holes (40) or slots is obtained in each tooth of said plurality of teeth (4), optionally wherein said holes (40) or slots are identical to each other in shape and/or size.

3. Coating (1) for wheels, said coating (1) having a hollow cylindrical configuration and extending radially between an inner portion (2) and an outer portion (3), said outer portion (3) being configured to act as a tread element,
wherein said inner portion (2) is configured to define a plurality of engagement elements, said engagement elements being in particular configured to make an interference-type coupling between said coating (1) and an element of a frame (10) for wheels,
wherein said coating (1) is made of plastic material and/or rubbery material, in particular said material being a thermoplastic elastomer with a hardness comprised between 40 and 90 shore, preferably comprised between 60 and 80 shore, more preferably such hardness being equal to 75 shore, and
wherein said outer portion (3) comprises a plurality of plugs (30), in particular configured to give said coating (1) traction and adhesion to the ground, said plugs extending in an at least partially radial direction away from said inner portion (2), and wherein a plurality of recesses (32), in particular configured to ensure the drainage of liquid elements and/or the passage of solid debris, are obtained between said plugs (30).

4. Coating (1) according to claim 3, wherein at least one plug of said plurality of plugs (30) and/or at least one recess of said plurality of recesses (32) has an at least partially curvilinear trend, and wherein at least one plug of said plurality of plugs (30) and/or at least one recess of said plurality of recesses (32) exhibits a first curvature (31', 32') and a second curvature (31", 32") so as to describe a substantially S-shape and wherein the transition between said first curvature (31', 32') and said second curvature (31", 32") occurs at a flex point (31‴, 32‴), optionally wherein the distance between said flex point (31‴, 32‴) and said end side margin (3') is substantially equal to the distance between said flex point (31‴, 32‴) and said end side margin (3").

5. Coating (1) for wheels, said coating (1) having a hollow cylindrical configuration and extending radially between an inner portion (2) and an outer portion (3), said outer portion (3) being configured to act as a tread element,
wherein said inner portion (2) is configured to define a plurality of engagement elements, said engagement elements being in particular configured to make an interference-type coupling between said coating (1) and an element of a frame (10) for wheels,
said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5) and
wherein, taking a tooth of said plurality of teeth (4) and taking a cavity of said plurality of cavities (5), the ratio between the extension in the radial direction of said coating (1) at said tooth and the extension in the radial direction of said coating (1) at said cavity is comprised between 1.9 and 2.7, preferably equal to 2.5 or close to 2.5.

6. Coating (1) for wheels, said coating (1) having a hollow cylindrical configuration and extending radially between an inner portion (2) and an outer portion (3), said outer portion (3) being configured to act as a tread element,
wherein said inner portion (2) is configured to define a plurality of engagement elements, said engagement elements being in particular configured to make an interference-type coupling between said coating (1) and an element of a frame (10) for wheels,
said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5) and
wherein at least one tooth of said plurality of teeth (4) has a first lateral side wall (41) extending along a predefined extension direction, said extension direction defining with the radial direction an angle less than 20°, preferably comprised between 0.1° and 5°, more preferably about 1°, optionally wherein said at least one tooth of said plurality of teeth (4) further has a second lateral side wall (42) opposite said first lateral side wall and substantially symmetrical with respect to said first lateral side wall (41).

7. Coating (1) for wheels, said coating (1) having a hollow cylindrical configuration and extending radially between an inner portion (2) and an outer portion (3), said outer portion (3) being configured to act as a tread element,
wherein said inner portion (2) is configured to define a plurality of engagement elements, said engagement elements being in particular configured to make an interference-type coupling between said coating (1) and an element of a frame (10) for wheels,
said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5) and
wherein, in a condition of said coating (1) disassembled and optionally also in a condition of said coating (1) assembled to said frame (10), the upper margin of each tooth of said plurality of teeth (4) has greater extension with respect to the corresponding base and wherein the open margin of each cavity of said plurality of cavities (5) has lesser extension with respect to the corresponding bottom margin.

8. Frame (10) for wheels, comprising a hub (25), a crown (28) and at least one supporting element, said hub (25) being configured to be coupled to a drive shaft or to an axle of a traction system, said crown (28) being configured to act as a support element for a coating (1) for wheels when said coating (1) is applied to said frame (10) so as to externally encircle said crown (28), said crown (28) being arranged peripherally with respect to said hub (25), said supporting element operating in connection between said hub (25) and said crown (28),
wherein said crown (28) is configured to define a plurality of engagement elements, said engagement elements being in particular configured to make an interference-type coupling between said frame (10) and said coating (1),
said engagement elements comprising a plurality of teeth (14) and defining a plurality of cavities (15), in particular a plurality of cavities (15) open outwards, wherein said teeth (14) emerge from a surface of said crown (28) away from said hub (25) and wherein said teeth (14) alternate with said cavities (15) so that two consecutive teeth of said plurality of teeth (14) are separated by a cavity of said plurality of cavities (15).

9. Frame (10) according to claim 8, wherein, taking a tooth of said plurality of teeth (14) and taking a cavity of said plurality of cavities (5), the ratio between the distance between the axis of said frame (10) and a point belonging to a facing surface of said crown (28) at said tooth and the distance between the axis of said frame (10) and a point belonging to a facing surface of said crown (28) at said cavity is comprised between 1.05 and 1.4, preferably comprised between 1.1 and 1.3, and/or wherein said teeth (14) have substantially the same extension in the radial direction or wherein, taking a first tooth and a second tooth of said plurality of teeth (14), the extension in the radial direction of said first tooth differs from the extension in the radial direction of said second tooth and/or wherein said teeth (14) and/or said cavities (15) have a substantially square or rectangular or trapezoidal or polygonal or circular or elliptical shape and/or
wherein the upper margin of each tooth of said plurality of teeth (14) has greater extension with respect to the corresponding base and wherein the open margin of each cavity of said plurality of cavities (15) has lesser extension with respect to the corresponding bottom margin and/or wherein said teeth (14) and said cavities (15) have a spatial periodicity and/or
in particular wherein said crown (28) describes an ideally axial-symmetrical shape, optionally wherein said frame (10) describes an ideally axial-symmetrical shape, in particular said frame (10) being ideally symmetrical with respect to an axis (X), said axis (X) passing through the central point of the circumference described by said frame (10) and a central point of a tooth of said plurality of teeth (14) or of a cavity of said plurality of cavities (15) and/or
wherein at least one tooth of said plurality of teeth (14) has a first lateral side wall (14') extending along a predefined extension direction, said extension direction defining with the radial direction an angle less than 20°, preferably comprised between 0.1° and 10°, more preferably about 1°, optionally wherein said at least one tooth of said plurality of teeth (14) further has a second lateral side wall (14") opposite said first lateral side wall (14') and substantially symmetrical with respect to said first lateral side wall (14') and/or
wherein said teeth (14) are identical to each other in shape and/or size.

10. Frame (10) for wheels, comprising a hub (25), a crown (28) and at least one supporting element, said hub (25) being configured to be coupled to a drive shaft or to an axle of a traction system, said crown (28) being configured to act as a support element for a coating (1) for wheels when said coating (1) is applied to said frame (10) so as to externally encircle said crown (28), said crown (28) being arranged peripherally with respect to said hub (25), said supporting element operating in connection between said hub (25) and said crown (28),
wherein said crown (28) is configured to define a plurality of engagement elements, said engagement elements being in particular configured to make an interference-type coupling between said frame (10) and said coating (1), and
wherein said frame (10) comprises at least one constraining element, in particular at least one constraining element extending in substantially axial direction, in particular said frame (10) comprising a plurality of constraining elements, optionally wherein said at least one constraining element is configured to be accommodated within a hole (40) or through slot of said coating (1),
in particular wherein said at least one constraining element comprises a peg (50), in particular wherein said peg (50) comprises a substantially cylindrical body and a tapered free end, optionally wherein each constraining element of said plurality of constraining elements comprises a peg (50) and/or in particular wherein said at least one constraining element, in particular peg (50), is located in the volume defined by a cavity of said plurality of cavities (15), in particular said at least one constraining element being located in a substantially central and/or substantially barycentric position with respect to the extension of said volume, optionally wherein the number of said constraining elements coincides with the number of said cavities (15), such that each of said constraining elements is located in the volume defined by the corresponding cavity of said plurality of cavities (15).

11. Frame (10) for wheels, comprising a hub (25), a crown (28) and at least one supporting element, said hub (25) being configured to be coupled to a drive shaft or to an axle of a traction system, said crown (28) being configured to act as a support element for a coating (1) for wheels when said coating (1) is applied to said frame (10) so as to externally encircle said crown (28), said crown (28) being arranged peripherally with respect to said hub (25), said supporting element operating in connection between said hub (25) and said crown (28),
wherein said crown (28) is configured to define a plurality of engagement elements, said engagement elements being in particular configured to make an interference-type coupling between said frame (10) and said coating (1), and
wherein said frame (10) is made of a rigid material, in particular plastic and/or plastic filled with glass and/or metal and/or a metal alloy, optionally wherein said frame (10) is made of polypropylene filled with glass, preferably polypropylene filled with 30% glass or made of iron or steel or aluminium or aluminium alloy.

12. Wheel assembly (9) configured to allow the movement of a mobile device (100) by rolling said wheel assembly (9), said wheel assembly (9) comprising a coating (1) and a frame (10),
wherein said coating (1) has a hollow cylindrical configuration and extends radially between an inner portion (2) and an outer portion (3), said outer portion (3) being configured to act as a tread element, wherein said inner portion (2) is configured to define a plurality of engagement elements, said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5),
wherein said frame (10) comprises a hub (25), a crown (28) and at least one supporting element, said hub (25) being configured to be coupled to a drive shaft or to an axle of a traction system, said crown (28) being configured to act as a support element for said coating (1) when said coating (1) is applied to said frame (10) so as to externally encircle said crown (28), said crown (28) being arranged peripherally with respect to said hub (25), said supporting element operating in connection between said hub (25) and said crown (28), wherein said crown (28) is configured to define a plurality of engagement elements, said engagement elements comprising a plurality of teeth (14) and defining a plurality of cavities (15), in particular a plurality of cavities (15) open outwards, wherein said teeth (14) emerge from a surface of said crown (28) away from said hub (25) and wherein said teeth (14) alternate with said cavities (15) so that two consecutive teeth of said plurality of teeth (14) are separated by a cavity of said plurality of cavities (15),
wherein each tooth of said plurality of teeth (4) of said coating (1) is at least partially housed within a corresponding cavity of said plurality of cavities (15) of said frame (10) and wherein each tooth of said plurality of teeth (14) of said frame (10) is at least partially housed within a corresponding cavity of said plurality of cavities (5) of said coating (1),
optionally wherein said at least one constraining element, in particular peg (50), of said frame (10) is accommodated in said at least one hole or slot of said coating (1),
and/or optionally wherein each constraining element, in particular peg (50), of said plurality of constraining elements, in particular pegs, of said frame (10) is accommodated in a corresponding hole or slot of said plurality of holes (40) or slots of said coating (1),
and/or optionally wherein the extension in the radial direction of said at least one constraining element, in particular of said peg (50), more in particular of said body of said peg (50), of said frame (10) is smaller than the extension in the radial direction of said at least one hole or slot of said coating (1), and/or optionally wherein the extension in the radial direction of each constraining element, in particular of each peg (50), more in particular of the body of each peg (50), of said frame (10) is smaller than the extension in the radial direction of each hole or slot of said plurality of holes or slots of said coating (1).

13. Wheel assembly (9) configured to allow the movement of a mobile device (100) by rolling said wheel assembly (9), said wheel assembly (9) comprising a coating (1) and a frame (10),
wherein said coating (1) has a hollow cylindrical configuration and extends radially between an inner portion (2) and an outer portion (3), said outer portion (3) being configured to act as a tread element, wherein said inner portion (2) is configured to define a plurality of engagement elements, said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5),
wherein said frame (10) comprises a hub (25), a crown (28) and at least one supporting element, said hub (25) being configured to be coupled to a drive shaft or to an axle of a traction system, said crown (28) being configured to act as a support element for said coating (1) when said coating (1) is applied to said frame (10) so as to externally encircle said crown (28), said crown (28) being arranged peripherally with respect to said hub (25), said supporting element operating in connection between said hub (25) and said crown (28), wherein said crown (28) is configured to define a plurality of engagement elements, said engagement elements comprising a plurality of teeth (14) and defining a plurality of cavities (15), in particular a plurality of cavities (15) open outwards, wherein said teeth (14) emerge from a surface of said crown (28) away from said hub (25) and wherein said teeth (14) alternate with said cavities (15) so that two consecutive teeth of said plurality of teeth (14) are separated by a cavity of said plurality of cavities (15),
wherein each lateral side wall (41, 42) of the teeth (4) of said coating (1) is in contact with a lateral side wall (14', 14") of the teeth (14) of said frame (10), wherein each lateral side wall (41, 42) of the teeth (4) of said coating (1) is configured to exert a pressure against the adjacent lateral side wall (14', 14") of the teeth (14) of said frame (10) and/or wherein each lateral side wall (41, 42) of the teeth (4) of said coating (1) is configured to be capable of sliding radially along the adjacent lateral side wall (14', 14") of the teeth (14) of said frame (10).

14. Wheel assembly (9) configured to allow the movement of a mobile device (100) by rolling said wheel assembly (9), said wheel assembly (9) comprising a coating (1) and a frame (10),
wherein said coating (1) has a hollow cylindrical configuration and extends radially between an inner portion (2) and an outer portion (3), said outer portion (3) being configured to act as a tread element, wherein said inner portion (2) is configured to define a plurality of engagement elements, said engagement elements comprising a plurality of teeth (4) and defining a plurality of cavities (5), in particular a plurality of cavities (5) open inwards, wherein said teeth (4) emerge from a surface of said inner portion (2) away from said outer portion (3) and wherein said teeth (4) alternate with said cavities (5) so that two consecutive teeth of said plurality of teeth (4) are separated from a cavity of said plurality of cavities (5),
wherein said frame (10) comprises a hub (25), a crown (28) and at least one supporting element, said hub (25) being configured to be coupled to a drive shaft or to an axle of a traction system, said crown (28) being configured to act as a support element for said coating (1) when said coating (1) is applied to said frame (10) so as to externally encircle said crown (28), said crown (28) being arranged peripherally with respect to said hub (25), said supporting element operating in connection between said hub (25) and said crown (28), wherein said crown (28) is configured to define a plurality of engagement elements, said engagement elements comprising a plurality of teeth (14) and defining a plurality of cavities (15), in particular a plurality of cavities (15) open outwards, wherein said teeth (14) emerge from a surface of said crown (28) away from said hub (25) and wherein said teeth (14) alternate with said cavities (15) so that two consecutive teeth of said plurality of teeth (14) are separated by a cavity of said plurality of cavities (15),
wherein each cavity of said plurality of cavities (15) of said frame (10) defines a respective inner volume, said inner volume being partially occupied by a corresponding tooth of said plurality of teeth (4) of said coating (1), wherein preferably the ratio between said inner volume and the volume occupied by said tooth is comprised between 1.01 and 1.5 and/or
wherein each cavity of said plurality of cavities (5) of said coating (1) defines a respective inner volume, said inner volume being partially occupied by a corresponding tooth of said plurality of teeth (14) of said frame (10), wherein preferably the ratio between said inner volume and the volume occupied by said tooth is comprised between 1.01 and 1.5.

15. Mobile device (100) configured to support and manage at least one payload, said at least one payload being rigidly and optionally removably constrained to said mobile device and being for example a cutting plate, wherein said mobile device comprises at least one wheel assembly (9) according to any one of claims 12 to 14, said at least one wheel assembly (9) being rotatably constrained to said mobile device (100), optionally wherein said wheel assembly (9) is rotatably constrained to a drive shaft or to an axle of a traction system of said mobile device (100), a bearing or a bushing being interposed between said drive shaft or said axle of said traction system and said hub (25) of said wheel assembly (9), and/or optionally wherein said mobile device (100) comprises at least a first wheel assembly and a second wheel assembly, said first wheel assembly and second wheel assembly being according to any one of claims 12 to 14 and being coaxial therebetween, in particular said first wheel assembly and second wheel assembly being mounted on said mobile device (100) as drive wheels.
